Europäisches Patentamt

**European Patent Office**

Office européen des brevets

(11) Numéro de publication: **0 022 944**
**B1**

(12) **FASCICULE DE BREVET EUROPEEN**

(45) Date de publication du fascicule du brevet:
01.08.84

(21) Numéro de dépôt: **80103653.4**

(22) Date de dépôt: **27.06.80**

(51) Int. Cl.³: **B 60 K 41/10,** F 16 H 5/66 //
G01D5/20, G01P3/488, F02P7/06

(54) **Dispositif électronique de commande des changements de rapports de vitesses pour une transmission automatique de véhicule automobile.**

(30) Priorité: **24.07.79 FR 7919104**

(43) Date de publication de la demande:
**28.01.81 Bulletin 81/4**

(45) Mention de la délivrance du brevet:
**01.08.84 Bulletin 84/31**

(84) Etats contractants désignés:
**BE DE GB IT NL SE**

(56) Documents cités:
**EP - A - 0 009 759**
**DE - A - 2 412 753**
**FR - A - 1 397 442**
**FR - A - 1 453 300**
**FR - A - 1 457 550**
**FR - A - 1 520 662**
**FR - A - 2 076 715**
**FR - A - 2 119 344**
**FR - A - 2 181 554**
**FR - A - 2 227 466**
**FR - A - 2 268 268**
**FR - A - 2 307 197**
**FR - A - 2 376 346**
**FR - A - 2 393 205**
**FR - A - 2 438 208**
**FR - E - 88 608**
**FR - E - 90 531**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Pannier, Gérard, 18, rue Laennec,**
**F-78390 Bois-d'Arcy (FR)**

(74) Mandataire: **Casalonga, Axel, BUREAU D.A.**
**CASALONGA OFFICE JOSSE & PETIT**
**Baaderstrasse 12-14, D-8000 München 5 (DE)**

ACTORUM AG

## Description

La présente invention a pour objet un dispositif électronique de commande des changements de rapports de vitesses pour une transmission automatique de véhicule automobile.

Une telle transmission automatique électrohydraulique comportant par exemple trois rapports de marche avant à passage sous couple et un rapport de marche arrière utilise généralement l'association d'une chaîne de puissance et d'une commande à faible niveau d'énergie. La chaîne de puissance qui transmet l'énergie du moteur d'entraînement du véhicule aux roues motrices comprend en particulier un convertisseur hydrocinétique de couple dont le rôle est d'assurer une liaison souple entre le moteur et le mécanisme de la transmission. La chaîne de puissance comprend également une boîte de vitesses à un ou plusieurs trains épicycloïdaux actionnés par un jeu d'embrayages et de freins à commande hydraulique. Dans une transmission automatique à trois rapports de marche avant la boîte de vitesses comprend ainsi un train d'engrenages épicycloïdal actionné par deux embrayages et deux freins à commande hydraulique. Ces embrayages et ces freins sont alimentés par un ensemble hydraulique piloté par des électrovannes au nombre de deux dans le cas d'une transmission à trois rapports de marche avant, électrovannes qui assurent les combinaisons voulues de l'ensemble des pignons pour obtenir automatiquement les différents rapports de vitesses de la transmission (FR-A-1 528 877).

La commande à faible niveau d'énergie associée à cette chaîne de puissance alimente sélectivement ces électrovannes en fonction d'informations concernant la marche du véhicule équipé de la transmission et en fonction des décisions du conducteur.

A titre d'exemple d'informations dépendant de la marche du véhicule, on peut citer la position de la pédale d'accélérateur correspondant à la charge demandée au moteur d'entraînement du véhicule ainsi que la vitesse de ce véhicule. Les décisions du conducteur peuvent être représentées en particulier par la position d'un organe manuel de commande qui permet d'imposer certains rapports de transmission et un contact de fin de course de la pédale d'accélérateur die «rétrocontact» permettant de rétrograder les rapports de transmission de façon imposée. Les actions commandées par le conducteur n'agissent sur l'automatisme que dans certaines plages de vitesse du véhicule pour garantir la tenue mécanique de la boîte de vitesses.

On connaît déjà des dispositifs électroniques de commande de ce type faisant intervenir à titre de paramètre la vitesse du véhicule et utilisant pour ce faire une prise tachymétrique de mouvement de la boîte de vitesses automatique. Dans ces dispositifs connus, les détecteurs de la vitesse du véhicule sont liés en rotation à un arbre de sortie de la transmission automatique. On se reportera notamment au brevet français 1 397 442 et à ses additions 88 608 et 90 531 intitulé «Alternateur à aimant tournant et à tension réglable, notamment applicable à la commande de transmission de puissance sur automobiles», au brevet français 1 457 550 intitulé «Gouverneur de commande en fonction de la fréquence et d'au moins un paramètre auxiliaire» ainsi qu'au brevet français 2 076 715 intitulé «Perfectionnement aux gouverneurs pour boîtes de vitesses automatiques».

Tous ces dispositifs connus présentent l'inconvénient d'augmenter l'encombrement de la transmission automatique ce qui rend difficile le montage du groupe motopropulseur incluant la transmission dans le sens transversal par rapport à l'axe longitudinal du véhicule.

Un objet de la présente invention est donc le remplacement de ces dispositifs détecteurs de vitesse de type connu par une prise directe de l'information vitesse du véhicule sur un organe existant de la boîte de vitesses portant à sa périphérie des dents régulièrement espacées. Il peut s'agir par exemple d'un pignon de sortie de la boîte de vitesses, d'une roue de parking ou d'un organe équivalent tournant à une vitesse proportionnelle à la vitesse du véhicule. La détection de vitesse peut alors se faire selon l'invention au moyen d'un capteur électromagnétique de proximité se trouvant à faible distance de la cible tournante. Cette disposition permet de réduire notablement l'encombrement de la transmission automatique en autorisant le montage du groupe propulseur/transmission aussi bien dans le sens longitudinal que dans le sens transversal par rapport au véhicule.

Dans les dispositifs de commande électronique de boîtes de vitesses automatiques de type connu, le boîtier électronique a généralement pour principale fonction la décision des rapports de vitesses à engager, la fonction d'exécution des changements de rapports de vitesses étant laissée à des dispositifs hydrauliques. On pourra se référer en particulier aux brevets français 1 453 300 intitulé «Dispositif de commande en tension notamment pour changement de rapport pour transmission automatique de véhicule», 1 457 550 intitulé «Gouverneur de commande en fonction de la fréquence et d'au moins un paramètre auxiliaire», 1 520 662 intitulé «Perfectionnement aux dispositifs de commande électrique pour boîtes de vitesses» et 2 076 715 intitulé «Perfectionnement aux gouverneurs pour boîtes de vitesses automatiques».

Par opposition à ces techniques connues, la présente invention permet l'incorporation dans le boîtier électronique des fonctions de décision des rapports de vitesses et d'exécution des changements de rapports de manière à effectuer les passages de vitesses sans à-coups par contrôle séquentiel des phases transitoires d'accouplement.

L'invention a encore pour objet un dispositif électronique de commande des changements de rapports de vitesses de ce type dans lequel la détection de l'information correspondant à la charge du moteur d'entraînement se fait par un capteur de déplacement de l'accélérateur présentant de faibles dimensions et qui peut de ce fait être facilement intégré à la liaison entre l'accélérateur et le carburateur ou tout autre organe équivalent. Dans un mode de réalisation où le détecteur de charge moteur est placé directement sur le carburateur, il fournit une information image de la position angulaire du papillon du carburateur qui peut être utilisée pour piloter en même temps que la transmission automatique des dispositifs de contrôle et de régulation de la vitesse du véhicule ou du carburateur par asservissement de la position du papillon ou tout autre dispositif nécessitant une telle information.

Le dispositif électronique de l'invention permet la commande des changements de rapport de vitesses pour une transmission automatique de véhicule automobile, notamment du type comportant trois rapports de marche avant à passage sous couple et une marche arrière. La transmission est pilotée par un circuit hydraulique comportant dans ce cas deux électrovannes de commande. Le dispositif électronique de commande reçoit des informations dépendant de la marche du véhicule et en particulier, de la position de la pédale d'accélérateur correspondant à la charge du moteur, de la vitesse du véhicule, de la position d'un organe manuel de commande imposant certains rapports de transmission et d'un rétrocontact de fin de course de la pédale d'accélérateur. Selon l'invention, le dispositif électronique de commande comprend en combinaison un dispositif gouverneur électronique recevant les informations précitées et fournissant un signal de passage du premier rapport de la transmission au deuxième rapport et vice versa, un signal de passage du deuxième rapport au troisième rapport et vice versa et un signal dont la fréquence correspond à la vitesse du véhicule; et un dispositif de commutation séquentielle recevant les signaux émis par le dispositif gouverneur électronique précité et fournissant un premier signal de commande pour la première électrovanne du circuit hydraulique avec une temporisation constante $\Delta t_1$, et un deuxième signal de commande pour la deuxième électrovanne du circuit hydraulique avec une temporisation variable $\Delta t_2$ dont la durée dépend respectivement de la position de la pédale d'accélérateur et de la vitesse du véhicule. Cette deuxième temporisation permet d'assurer une durée variable de l'état transitoire du dispositif de commande hydraulique pour le passage du troisième rapport au deuxième rapport de marche avant de la transmission en laissant au moteur d'entraînement du véhicule le temps d'atteindre la vitesse de synchronisme convenable.

Le dispositif gouverneur électronique comprend deux périodemètres. Le premier périodemètre fournit un signal pour la commande du passage du premier rapport de la transmission au deuxième rapport et vice versa. Le deuxième périodemètre fournit un signal pour la commande du passage du deuxième rapport de la transmission au troisième rapport et vice versa. Chaque périodemètre compare la durée de la période d'un signal correspondant à la vitesse du véhicule avec la durée d'un signal de référence correspondant à la charge du moteur.

Le dispositif gouverneur électronique est en outre piloté par deux interrupteurs dont la position dépend de celle de l'organe manuel de commande de la transmission et qui permettent de sélectionner respectivement le premier rapport de la transmission et les premier ou deuxième rapports de la transmission. Un interrupteur de rétrocontact peut également agir sur le dispositif gouverneur électronique. Ces trois interrupteurs ont une action directe sur les deux périodemètres.

Chacun de ces périodemètres reçoit le signal de sortie d'un générateur de courant relié à un capteur de la charge du moteur d'entraînement. Le générateur de courant coopérant avec le premier périodemètre commandant le passage du premier rapport de la transmission au deuxième rapport et vice versa est en outre relié à l'interrupteur d'imposition du premier rapport.

Le capteur de la position de la pédale d'accélérateur est avantageusement constitué par un potentiomètre entraîné en rotation par l'axe du papillon du carburateur.

Dans un mode de réalisation préféré du dispositif électronique de l'invention, la détection de la vitesse du véhicule est réalisée au moyen d'un capteur de déplacement d'un organe rotatif ferromagnétique crénelé dont la rotation est représentative de la vitesse du véhicule. La détection se fait à l'aide d'une bobine d'induction placée à proximité dudit organe rotatif et alimentée en courant alternatif à haute fréquence. Le circuit électronique associé au capteur est adapté pour effectuer une détection positive suivie d'une amplification non inverseuse.

Dans un autre mode de réalisation avantageux, le capteur de déplacement dudit organe rotatif comprend un aimant permanent en contact avec un noyau de fer doux, l'ensemble étant partiellement recouvert d'un bobinage et placé au voisinage des créneaux de l'organe rotatif avec un faible entrefer de façon à obtenir dans le bobinage une force électromotrice d'induction.

Dans les deux cas le capteur de déplacement est de préférence associé à un circuit de traitement comprenant un dispositif intégrateur fournissant la valeur moyenne du signal basse fréquence amplifié et un amplificateur différentiel dont les deux entrées sont alimentées respectivement par le signal basse fréquence amplifié et par ladite valeur moyenne. Un détecteur de seuil relié à l'amplificateur fournit un signal rectangulaire.

Le signal rectangulaire provenant du capteur détectant la vitesse du véhicule alimente de préférence un dispositif diviseur de fréquence et différentiateur relié d'autre part aux deux périodemètres précités. Selon l'invention le rapport de division de fréquence est égal au nombre de créneaux de l'organe rotatif crénelé qui coopère avec le capteur de déplacement détectant la vitesse du véhicule. Il est ainsi possible d'éliminer l'influence éventuelle des imperfections de la denture ou des créneaux de l'organe rotatif précité.

Les deux dispositifs périodemètres peuvent être réalisés au moyen d'éléments connus en eux-mêmes et comprennent de préférence chacun un générateur/comparateur de temps qui compare la période du signal représentant la vitesse du véhicule à la durée d'un signal qu'il génère lui-même et qui est proportionnel à une tension fournie par un générateur de seuil et inversement proportionnelle à l'intensité d'un générateur de courant piloté par le signal correspondant à la charge du moteur d'entraînement. Les périodemètres comportent de plus chacun une bascule bistable mémorisant le résultat de la comparaison. Il comprennent également chacun une porte de blocage coopérant avec les interrupteurs reliés à l'organe de commande manuel de façon à imposer une sortie déterminée pour la bascule bistable ainsi qu'un dispositif de commande d'hystéréris permettant d'obtenir des lois de passage des vitesses déterminées.

Dans un mode de réalisation avantageux, les bascules bistables des deux périodemètres respectifs sont reliées entre elles de façon que les impulsions de commande de la bascule du deuxième périodemètre qui commande le passage du deuxième rapport au troisième rapport et vice versa, puissent également commander le premier périodemètre, dans le cas où les impulsions de commande de ce dernier seraient d'amplitude trop faible pour remettre ladite bascule dans la bonne position à la suite d'un changement accidentel d'état, dû par exemple à la présence de parasites ou à une coupure de la tension d'alimentation.

Le dispositif de commutation séquentielle des deux électrovannes pilotant le dispositif de commande hydraulique et associé au gouverneur électronique comprend un premier bloc de traitement des deux signaux de seuil de passage des rapports de marche avant émis par le gouverneur électronique et fournissant un premier signal de commande pour la première électrovanne avec une première temporisation constante. Ce premier signal assure une durée relativement courte et constante quelle que soit la marche du véhicule pour l'état transitoire du dispositif de commande hydraulique lors du passage du deuxième rapport au troisième rapport de marche avant. Le dispositif de commutation séquentielle comprend en outre un deuxième bloc de traitement des deux signaux de seuil de passage des rapports de vitesses issus du gouverneur électronique. Le deuxième bloc de traitement reçoit également le signal fonction de la pédale d'accélérateur et le signal de fréquence fonction de la vitesse du véhicule traité par le gouverneur électronique. Le deuxième bloc de traitement fournit un deuxième signal de commande pour la deuxième électrovanne avec une deuxième temporisation dont la durée est variable en fonction des signaux dépendant respectivement de la position de la pédale d'accélérateur et de la vitesse du véhicule. Cette deuxième temporisation permet d'assurer une durée variable de l'état transitoire du dispositif de commande hydraulique pour le passage du troisième rapport au deuxième rapport de marche avant en laissant au moteur d'entraînement du véhicule le temps d'atteindre la vitesse de synchronisme convenable.

Le dispositif électronique de commande selon l'invention comprend de préférence pour chacune des électrovannes de commande du dispositif électronique un étage de puissance recevant le signal de sortie correspondant du dispositif de commutation séquentielle. Chacun de ces étages de puissance comprend de préférence un transistor de puissance dont la charge placée entre l'émetteur et la source d'alimentation est constituée par la bobine de l'électrovanne respective. Le collecteur de ce transistor de puissance est relié à la masse et sa base est connectée à la sortie d'un amplificateur avec interposition en parallèle d'une résistance reliée à la source d'alimentation. Il est ainsi possible de faciliter le refroidissement des transistors de puissance de chacun des deux étages de puissance et d'éviter le montage d'une diode de récupération qui est en général utilisée et montée en parallèle sur chaque électrovanne de commande afin d'assurer la protection du transistor de puissance correspondant.

Quelques exemples de réalisation de l'invention sont illustrés par les dessins annexés, sur lesquels:

la fig. 1 montre schématiquement l'ensemble des organes essentiels de la commande d'une transmission automatique à trois rapports de marche avant et une marche arrière comportant un train d'engrenages épicycloïdal actionné par deux embrayages et deux freins à commande hydraulique;

la fig. 2 illustre un tableau synoptique montrant selon la position du levier de sélection des vitesses et le rapport engagé, l'état des deux électrovannes de commande ainsi que l'état qui en résulte pour les deux embrayages et les deux freins de la transmission;

la fig. 3 illustre un schéma simplifié d'un dispositif électronique de commande des changements de vitesses selon l'invention;

la fig. 4 montre un exemple de lois de passage des vitesses dans le mode de fonctionnement automatique de la transmission;

la fig. 5 montre les formes d'ondes aux entrées et sorties du dispositif de commutation séquentielle de l'ensemble de la commande de la fig. 1;

la fig. 6 illustre un schéma synoptique d'un premier mode de réalisation de l'ensemble du détecteur de la vitesse du véhicule;

la fig. 7 illustre un schéma synoptique d'un second mode de réalisation du détecteur de la vitesse du véhicule;

la fig. 8 illustre un schéma synoptique d'un exemple de réalisation des périodemètres utilisés dans le dispositif de l'invention;

la fig. 9 illustre un schéma électronique détaillé d'un circuit pouvant réaliser les fonctions illustrées par la fig. 8;

les figs 10 à 13 montrent l'évolution dans le temps des formes d'onde obtenues en divers points du circuit de la fig. 9 dans différents cas de fonctionnement de l'automatisme;

la fig. 14 montre un schéma électronique détaillé de l'ensemble du dispositif gouverneur électronique de la fig. 3;

la fig. 15 est un schéma synoptique d'un premier mode de réalisation d'un circuit de commande pouvant être utilisé dans le dispositif de commande séquentielle de la fig. 3;

la fig. 16 est une courbe illustrant la temporisation $\Delta t_2$ obtenue par le dispositif de la fig. 15 en fonction de la fréquence d'entrée correspondant à la vitesse du véhicule pour deux valeurs du signal C fonction de la position de la pédale d'accélérateur;

la fig. 17 est un schéma synoptique d'un deuxième mode de réalisation d'un circuit de commande pouvant être utilisé dans le dispositif de commande séquentielle de la fig. 3;

la fig. 18 est une courbe illustrant les trois niveaux de temporisation $\Delta t_2$ obtenus par le dispositif de la fig. 17 en fonction de la fréquence d'entrée correspondant à la vitesse du véhicule pour deux valeurs du signal C fonction de la position de la pédale d'accélérateur, et

la fig. 19 est un schéma électronique détaillé d'un mode de réalisation des étages de puissance commandant les électrovannes du dispositif hydraulique.

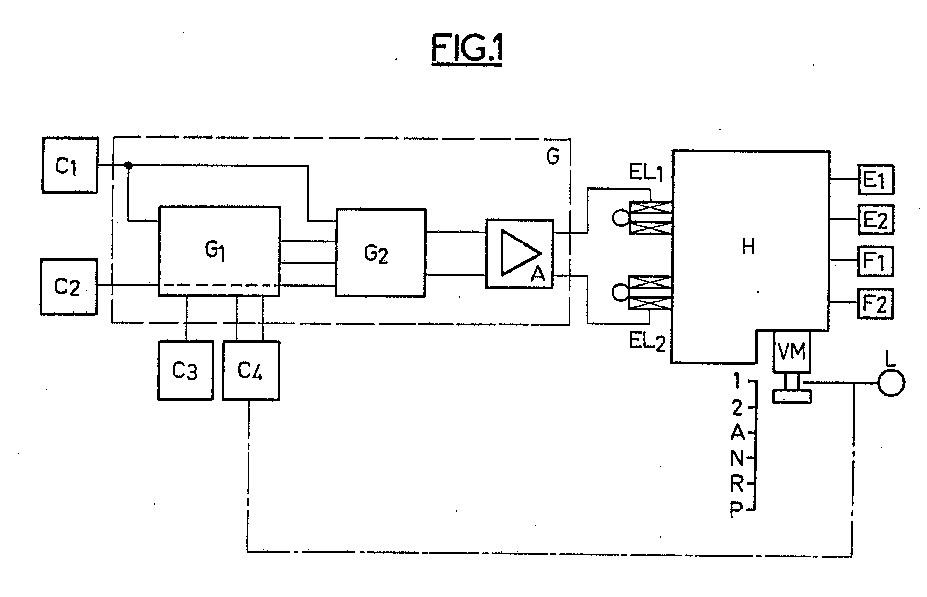

Tels qu'ils sont représentés sur la fig. 1, les éléments de la commande de la transmission automatique à trois rapports de marche avant et une marche arrière comprennent un circuit hydraulique de puissance H susceptible d'alimenter en fluide hydraulique les deux embrayages $E_1$, $E_2$ et les deux freins $F_1$ et $F_2$ qui actionnent le train d'engrenages épicycloïdal de la transmission non représentée sur la figure. Le circuit hydraulique H est commandé par une vanne manuelle VM reliée mécaniquement au levier de sélection des vitesses L et par l'intermédiaire de deux électrovannes $EL_1$ et $EL_2$ qui sont par exemple du type comportant une bille en matériau magnétique pouvant se déplacer entre deux positions sous l'actions d'une bobine d'électroaimant. Un dispositif de commande électronique G reçoit du capteur $C_1$ une information sur la position de l'accélérateur du véhicule qui est l'image de l'effort demandé au moteur; du capteur $C_2$, une information sur la vitesse du véhicule; du rétrocontact $C_3$ placé en fin de course de la pédale d'accélérateur, les demandes de rétrogradation des rapports faites par le conducteur; et du contacteur $C_4$ relié mécaniquement au levier de sélection des vitesses L, une information sur les positions 1 et 2 commandant respectivement les fonctions «première vitesse imposée» et «troisième vitesse interdite» (première et deuxième seules autorisées).

Le dispositif de commande G comprend un dispositif gouverneur électronique $G_1$ qui fournit des ordres électriques de sélection des rapports de vitesses au dispositif de commutation séquentielle $G_2$ à partir de la combinaison des signaux des détecteurs $C_1$ à $C_4$. Le dispositif $G_2$ de contrôle séquentiel des phases transitoires d'accouplement assure en fonction de l'information vitesse véhicule traitée par le dispositif $G_1$ et de la position de l'accélérateur provenant du capteur $C_1$ l'exécution en souplesse des changements de rapports.

Les deux signaux de sortie du dispositif $G_2$ sont appliqués après amplification en puissance par le dispositif A aux électrovannes $EL_1$ et $EL_2$ qui assurent l'interface électrohydraulique entre le dispositif de commande G et le bloc hydraulique H.

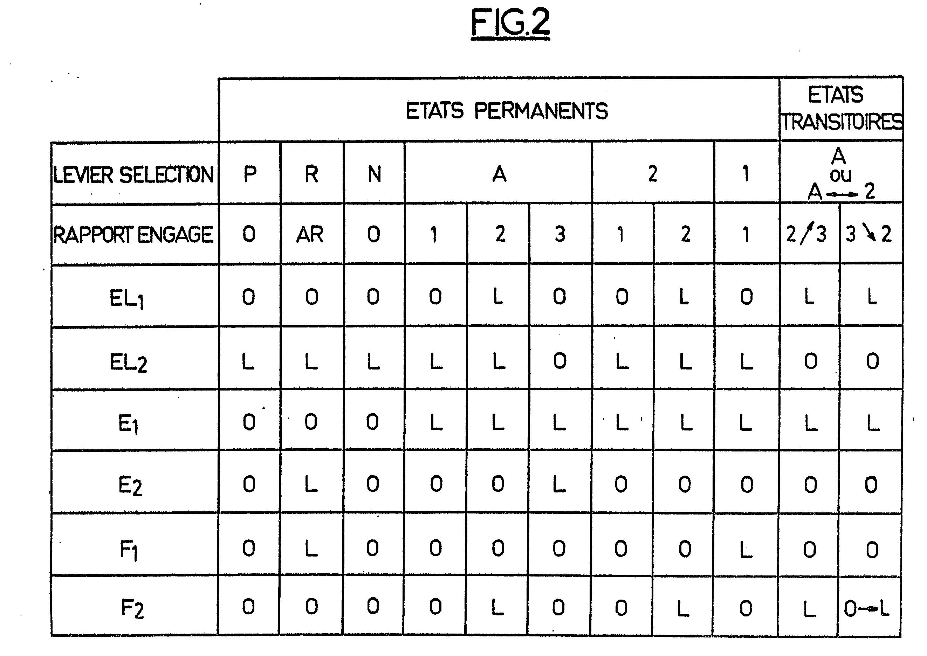

On se reportera à la fig. 2 pour connaître les états respectifs des deux électrovannes $EL_1$ et $EL_2$ selon la position du levier de sélection L et selon le rapport engagé de la transmission. La référence «O» signifie que l'électrovanne correspondante n'est pas excitée tandis que la référence «L» signifie que l'électrovanne correspondante est excitée. On notera que les trois rapports de marche avant (1, 2 et 3), le rapport de marche arrière (AR) et les positions de point mort (N) et d'arrêt avec blocage «parking» (P) sont obtenus au moyen de trois états des deux électrovannes $EL_1$ et $EL_2$. Les états transitoires correspondants au passage «montant» entre le deuxième et le troisième rapport et inversement au passage «descendant» entre le troisième et le deuxième rapport, sont obtenus au moyen du quatrième état possible des deux électrovannes.

La fig. 2 montre également l'état des deux embrayages ($E_1$, $E_2$) et des deux freins ($F_1$, $F_2$) de la transmission pour chaque configuration des deux électrovannes ($EL_1$, $EL_2$). Le repère «O» signifie que l'élément correspondant n'est pas alimenté en fluide hydraulique et n'est donc pas serré tandis que le repère «L» signifie que l'élément correspondant est alimenté en fluide hydraulique et se trouve serré.

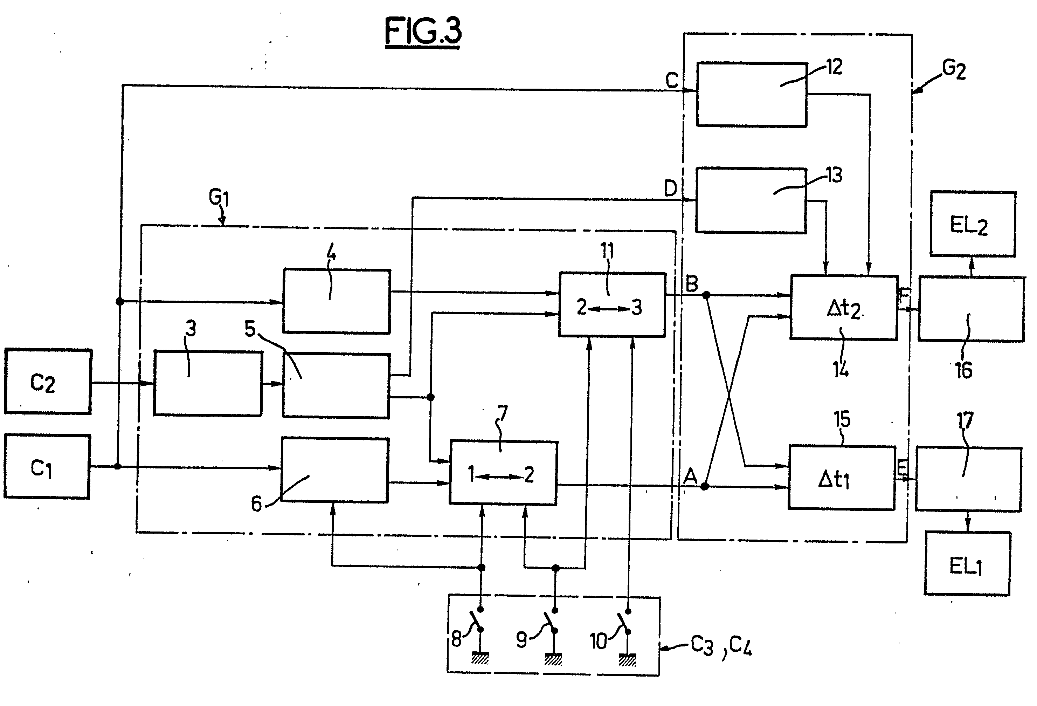

Dans l'ensemble du dispositif représenté sur la fig. 3, on retrouve les éléments $G_1$ et $G_2$ du gouverneur G décrits sur la fig. 1. Le dispositif $G_1$ se compose du périodemètre 7 de commande des passages du premier au deuxième rapport de transmission en vitesse croissante ou du deuxième rapport au premier en vitesse décroissante et du périodemètre 11 de commande des passage du deuxième au troisième rapport de transmission en vitesse croissante ou du troisième rapport au deuxième en vitesse décroissante. On notera que les seuils de changement de vitesses doivent présenter une hystérésis entre les passages en montant et en rétrogradant les rapports, nécessaire à la stabilité de fonctionnement de l'automatisme.

Les deux périodemètres 7 et 11 comparent la durée de la période du signal provenant du diviseur de fréquence et différentiateur 5 qui reçoit l'information tachymétrique du capteur de vitesse véhicule $C_2$ à travers son circuit électronique de traitement 3 avec la durée des signaux de référence autogénérés par les deux périodemètres en fonction des intensités fournies par les générateurs de courant 4 et 6 pilotés par le capteur de charge moteur $C_1$. Les deux périodemètres reçoivent de plus, les informations électriques provenant de trois interrupteurs 8, 9 et 10 correspondant

aux informations $C_3$ et $C_4$ de la fig. 1. La commande du rétrocontact 9 en fin de course de la pédale d'accélérateur fait diminuer la durée des deux temps de référence cités précédemment. La manœuvre du levier de sélection des vitesses agit sur les interrupteurs 8 et 10. La position «2» du levier de sélection L correspondant à la condition «troisième vitesse interdite», provoque la fermeture de l'interrupteur 10 qui positionne impérativement le périodemètre 11 dans l'état correspondant au second rapport de transmission. La position «1» correspondant à la condition «première vitesses imposée», provoque la fermeture des interrupteurs 8 et 10 qui, par l'intermédiaire du contact 8, par mesure de sécurité de fonctionnement, ne positionne en vitesse décroissante le périodemètre 7 dans l'état correspondant au premier rapport que lorsque la vitesse véhicule est inférieure à un seuil limite, obtenu par la commande du générateur de courant 6, de telle façon que l'engagement du premier rapport soit sans danger pour la tenue mécanique de la transmission automatique, et maintient cet état, par la suite, même en accélération, pour obtenir l'effet de frein moteur.

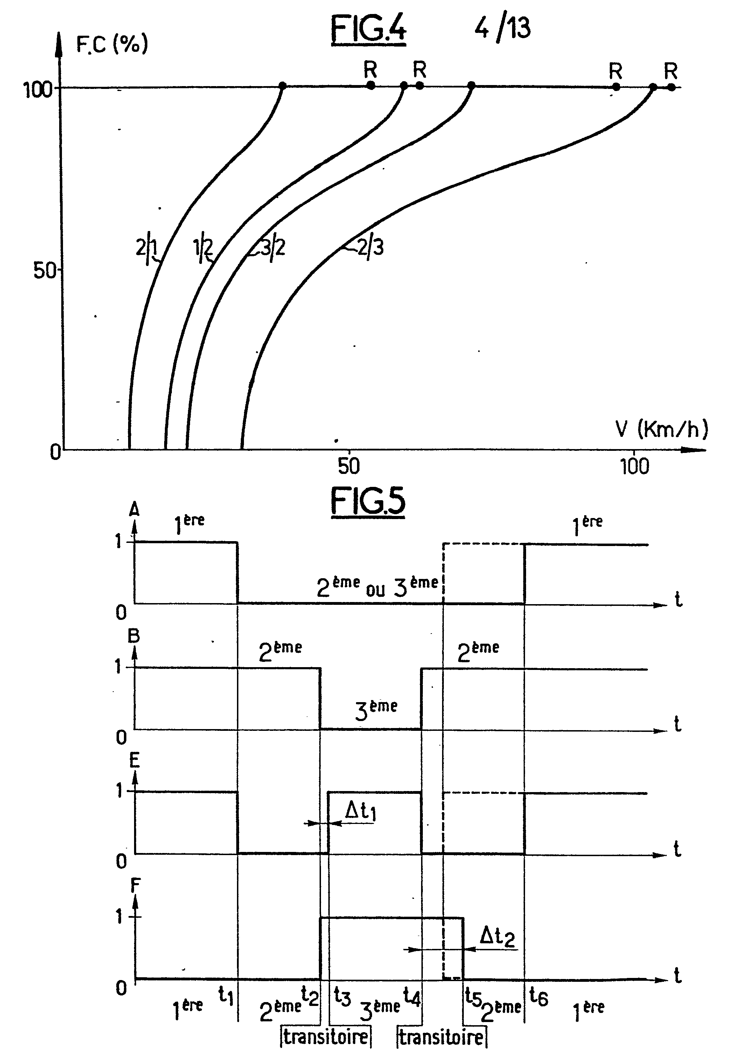

Le graphique de la fig. 4 reproduit un exemple de lois de passage des vitesses dans le mode de fonctionnement automatique de la transmission sur lequel on trouve les trois facteurs de pilotage des seuils de passage: vitesse du véhicule V, charge F.C. et état du rétrocontact R.

Les changements de rapport se produisent à chaque fois que le point de fonctionnement de l'automatisme se déplaçant dans l'espace vitesse/charge croise une des courbes de passage limitées par les positions «pied levé» et «pied à fond» de l'accélérateur correspondant aux niveaux extrêmes (0 et 100% du facteur charge F.C.) de la charge moteur. On remarquera l'action du rétrocontact qui décale jusqu'au point R vers les vitesses supérieures les seuils de passage des vitesses en position «pied à fond» de l'accélérateur (100% de F.C.). Cette action est particulièrement notable pour les seuils de passage 3/2 et 2/1. On notera également sur la fig. 4 l'hystérésis entre les passages montant et descendant des rapports de vitesses.

Dans le dispositif $G_2$ de la fig. 3, les signaux de sortie A et B des périodemètres 7 et 11 sont combinés et retardés du temps constant $\Delta t_1$ par le bloc de traitement 15 qui assure par le signal E l'alimentation correcte de l'électrovanne $EL_1$ par l'intermédiaire de l'amplificateur en puissance 17 suivant les séquences données par le tableau de la fig. 2. Le bloc de traitement 14 relié également aux deux périodemètres 7 et 11 reçoit les deux informations de commande du détecteur de niveau de tension 12 recevant le signal C du capteur charge $C_1$ et du détecteur de fréquence 13 recevant le signal tachymétrique de sortie D du diviseur 5. Le bloc 14 combine et retarde d'une durée variable $\Delta t_2$ les signaux A et B des deux périodemètres 7 et 11 en fonction des informations des deux détecteurs 12 et 13 et fournit le signal F pour commander à partir de l'amplificateur en puissance 16, l'électrovanne $EL_2$ suivant les séquences données par le tableau de la fig. 2.

En se reportant à la fig. 5, on peut observer l'évolution en fonction du temps des tensions des différents signaux du dispositif $G_2$. Le signal de sortie E du bloc de traitement 15 est au niveau haut lorsque les signaux A et B provenant des périodemètres 7 et 11 sont tous deux hauts; le signal de sortie E du bloc de traitement 15 est au niveau bas lorsque le signal A du périodemètre 7 est au niveau bas et que le signal B du périodemètre 11 est haut, il reste au niveau bas pendant un temps $\Delta t_1$ constant compté à partir du front de descente (niveau haut vers le niveau bas) du signal B du périodemètre 11 lorsque le signal A du périodemètre 7 est au niveau bas et passe rapidement à la valeur haute pendant que les signaux A et B des périodemètres 7 et 11 restent au niveau bas.

Le signal de sortie F du bloc de traitement 14 est au niveau haut quand le signal de sortie B du périodemètre 11 est au niveau bas. Il reste au niveau haut pendant un temps $\Delta t_2$ compté à partir du front de montée (niveau bas vers le niveau haut) du signal B du périodemètre 11. Le temps $\Delta t_2$ est variable avec la tension du signal C fourni par le capteur de charge moteur $C_1$ qui agit par l'intermédiaire du détecteur de niveau de tension 12 et avec la fréquence du signal tachymétrique D de sortie du diviseur 5 qui agit par l'intermédiaire du détecteur de fréquence 13, visible sur la fig. 3. Le signal de sortie F du bloc de traitement 14 passe rapidement à la valeur basse pendant que le signal A du périodemètre 7 est bas et que le signal B du périodemètre 11 est haut. Le niveau haut du signal A du périodemètre 7 impose le niveau bas du signal de sortie F du bloc de traitement 14 comme on peut le voir sur les courbes en tirets de la fig. 5.

On notera que le passage du signal de sortie A du périodemètre 7 du niveau haut au niveau bas correspond au passage du premier au deuxième rapport de la transmission. Le passage du signal de sortie B du périodemètre 11 du niveau haut au niveau bas correspond au passage du deuxième au troisième rapport. Dans ces conditions et selon les séquences données par le tableau de la fig. 2, depuis le temps zéro jusqu'au temps $t_1$ de la fig. 5, le dispositif de commande hydraulique se trouve dans une configuration correspondant au premier rapport de vitesse. Du temps $t_1$ au temps $t_2$, la transmission se trouve sur le deuxième rapport. Pendant le temps $\Delta t_1$ c'est-à-dire de $t_2$ à $t_3$ lors de la transition du deuxième au troisième rapport de vitesse, le dispositif de commande hydraulique piloté par les deux électrovannes $El_1$ et $EL_2$ dans leur quatrième état se trouve dans une configuration correspondant à l'état transitoire. Du temps $t_3$ jusqu'au temps $t_4$ la transmission se trouve sur le troisième rapport. Pendant la durée $\Delta t_2$ c'est-à-dire de $t_4$ à $t_5$ les deux électrovannes $EL_1$ et $EL_2$ se trouvent dans le quatrième état correspondant à l'état transitoire du passage de la troisième vitesse à la deuxième vitesse. Du temps $t_5$ au temps $t_6$, on se trouve à nouveau en deuxième vitesse et enfin au delà de $t_6$, la transmission est à nouveau dans la configuration de la première vitesse. En pratique, l'ordre des vitesses est toujours respecté parce que dans le dispositif $G_1$ de la fig. 3, le niveau bas du signal de sortie B du périodemètre 11 ne peut être obtenu que lorsque le signal de sortie A du périodemètre 7 est déjà bas.

Dans l'ensemble du dispositif représenté sur la fig. 3, le capteur de la charge du moteur $C_1$ peut être réalisé de manière connue en soi avec un potentiomètre rotatif muni d'une piste résistante à grande durée de vie par exemple du type «plastique conducteur» qui possède également une bonne tenue aux vibrations et aux microdéplacements du curseur. Il est de préférence fixé au carburateur et est entraîné en rotation par l'axe du papillon au moyen d'une liaison autorisant les défauts d'alignement qui peut être par exemple réalisée avec un accouplement souple, avec des transmissions à tournevis et fente, à ressort ou à bielle et manivelle à jeu radial. La réalisation de la forme de la loi de passage des vitesses est confiée au capteur de charge moteur $C_1$ qui selon l'importance du nombre de variantes des lois de passage à réaliser et l'éventualité d'utiliser l'information correspondant à «l'ouverture du papillon de carburateur» pour piloter des dispositifs autres que celui de la commande de transmission automatique, peut être simplement un potentiomètre à courbe fonctionnelle qui permet l'alimentation directe des générateurs de courant 4 et 6 de la fig. 3, ou un potentiomètre à courbe linéaire associé soit à un générateur électronique de fonction qui éxecute une transformation non linéaire de la tension recueillie sur le curseur du potentiomètre soit à une liaison mécanique papillon/potentiomètre à cames.

Le capteur de la vitesse du véhicule $C_2$ représenté sur la fig. 3 est fixé sur la transmission automatique. Dans un mode de réalisation préféré de l'invention le corps du capteur traverse la paroi du carter de la boîte de vitesses de telle façon que l'élément sensible situé à son extrémité se trouve à faible distance de la denture de la roue cannelée d'engagement du verrou de parking.

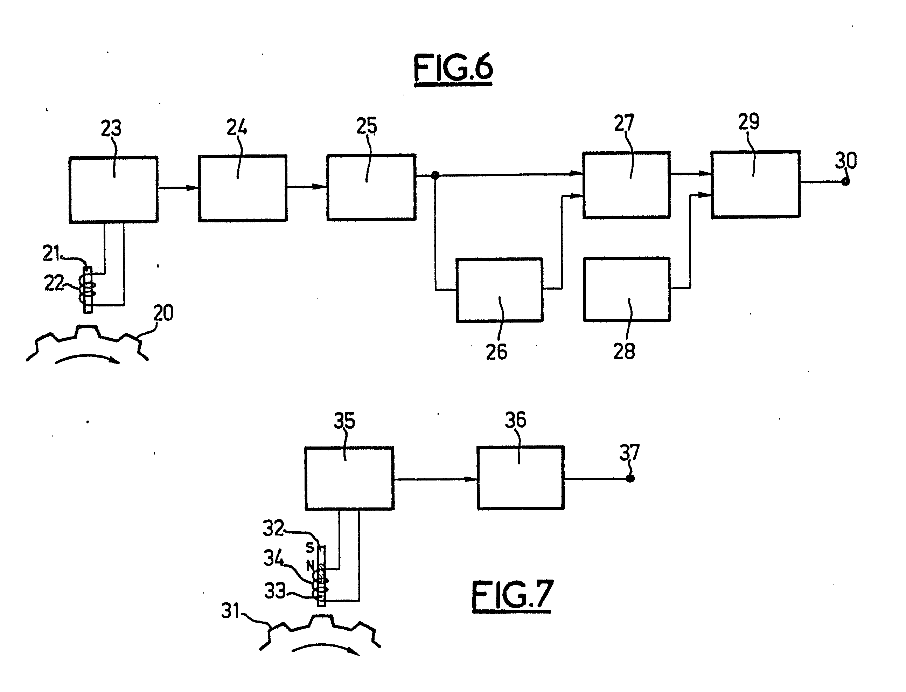

La première variante de réalisation est illustrée sur la fig. 6 et a déjà fait l'objet d'une description dans la demande de brevet français de la demanderesse n° 7 828 435 déposée le 4 octobre 1978 et intitulée «Dispositif électronique à grande plage de détection associé à un capteur de déplacement» auquel on pourra se référer pour plus de précision. Dans ce mode de réalisation le capteur de vitesse est du type inductif à alimentation haute fréquence. Il est constitué d'un bobinage 22 placé sur un noyau magnétique en ferrite 21 en forme de barreau cylindrique ou de coupelle. Le capteur est alimenté en courant alternatif haute fréquence par l'oscillateur 23 qui induit dans le bobinage un flux magnétique de fuite focalisé par le noyau de ferrite 21 vers la roue cannelée de parking 20. La présence des dents dans ce champ crée des courants de Foucault dans leur masse métallique qui, en augmentant les pertes électriques, diminue le coefficient de qualité du bobinage.

Le passage des dents devant le capteur se traduit par des variations de l'amplitude de la tension d'oscillation haute fréquence recueillie aux bornes du bobinage 22 par le circuit de détection positive 24. Le signal basse fréquence issu du circuit 24 est envoyé dans un amplificateur non inverseur à liaison continue 25 qui est chargé d'amplifier à la fois la composante continue image de la distance cible/capteur et la tension alternative basse fréquence image de la denture de la roue de parking. Le circuit amplificateur soustracteur 27 a pour fonction d'amplifier la différence entre le signal de détection basse fréquence amplifié par le circuit 25 et sa valeur moyenne issue du circuit intégrateur 26. Pour éliminer l'apparition d'impulsions parasites, le circuit amplificateur soustracteur 27 est connecté de telle façon qu'à la mise sous tension ou en l'absence de déplacement de la cible le niveau de sortie du bloc 27 soit bas lorsque le capteur se trouve devant un des creux de la roue de parking. Cet amplificateur 27 est suivi d'un circuit de mise en forme du signal composé d'un circuit 28 qui génère un seuil de tension variable en fonction de la tension d'alimentation du dispositif électronique, et d'un circuit 29 comparateur de tension. Ce dernier compare le signal de sortie de l'amplificateur 27 au seuil de tension délivré par le circuit 28 et fournit, à l'extérieur d'une grande plage de variation de la distance capteur/cible, un signal de sortie 30 rectangulaire à fronts raides dont le rapport cyclique, non influencé par la tension d'alimentation, ne dépend que de la forme de denture de la cible et dont la fréquence est la même que celle du passage des dents.

Selon un deuxième mode de réalisation illustré par la fig. 7, le capteur de vitesse est du type électromagnétique à variation de réluctance. Il est constitué d'un aimant permanent cylindrique 32 en contact avec un barreau de fer doux 33 et d'un bobinage 34 qui recouvre en partie le barreau 33 et l'aimant 32. Les modifications brutales d'entrefer capteur/cible à chaque passage des dents de la roue de parking 31 produisent des variations de champ magnétique dans le barreau de fer 33, influencé par l'aimant 32, qui génèrent dans le bobinage 34 une force électromotrice d'induction. Cette force électromotrice qui dépend du nombre de spires du bobinage 34 et de la vitesse de variation du flux au passage des dents de la cible 31, est une grandeur alternative périodique dont la fréquence est la même que celle du passage des dents de la roue de parking et dont l'amplitude est proportionnelle à cette fréquence.

Le signal issu du capteur à variation de réluctance est envoyé à un dispositif électronique composé d'un amplificateur 35 de type «soustracteur et filtre passe bas à intégration» et d'un circuit de mise en forme 36. La double fonction de l'amplificateur 35 qui possède un gain variable avec la fréquence des signaux d'entrée permet, dans la plage de vitesses de la roue de parking, de maintenir pratiquement constante l'amplitude du signal de sortie et d'éliminer les impulsions parasites qui peuvent accidentellement apparaître sur l'une, l'autre ou sur les deux connexions reliant le capteur à son dispositif électronique de traitement. L'amplificateur 35 est suivi d'un circuit 36 de mise en forme du signal qui permet d'obtenir en sortie, dans une grande plage de variation de distance capteur/cible une tension de sortie rectangulaire à fronts raides 37 dont la fréquence est la même que celle du passage des dents. Le circuit de mise en forme 36 peut être réalisé soit simplement au moyen d'un montage «TRIGGER» qui compare le signal délivré par l'amplificateur 35 à un seuil de référence, soit, dans une réalisation plus performante, au moyen des circuits 26 à 29 du schéma de la fig. 6 qui amplifient la différence entre le signal image de la vitesse de la roue de parking et sa valeur moyenne puis effectuent la mise en forme rectangulaire par comparaison du signal de différence à une fraction de la tension d'alimentation afin d'obtenir le signal de sortie 37.

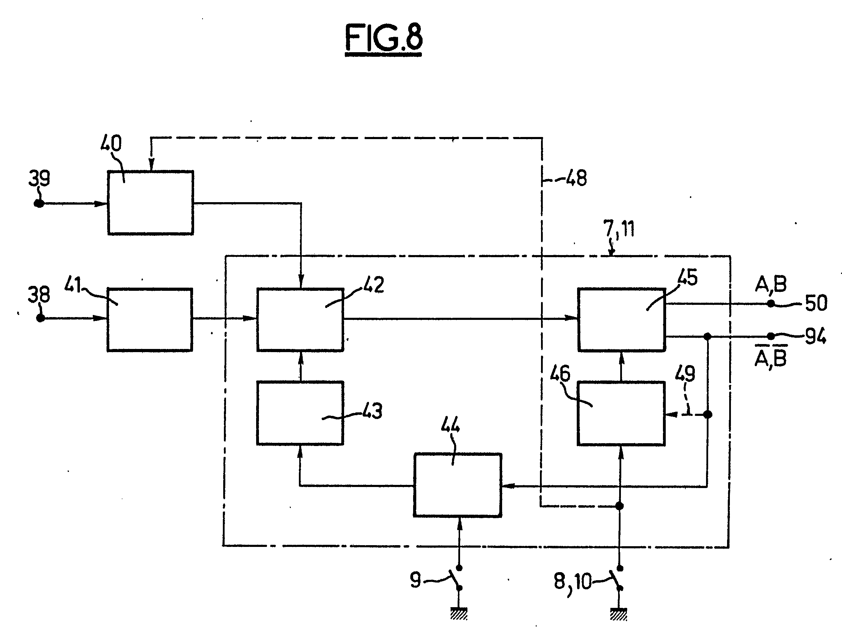

La fig. 8 montre le schéma synoptique d'un mode de réalisation des périodemètres 7 ou 11 de la fig. 3. Les connexions communes aux deux périodemètres sont indiquées en trait plein. Les connexions en tirets correspondent uniquement au périodemètre 7. Chaque périodemètre 7, 11 reçoit un certain nombre d'informations d'entrée comprenant: le signal vitesse véhicule 38 provenant du diviseur de fréquence 5 de la fig. 3; le signal charge moteur 39 provenant du capteur potentiométrique $C_1$ de la fig. 3; la position de l'interrupteur 9 du rétrocontact en fin de course de l'accélérateur et de l'interrupteur 8 ou 10 de la commande manuelle d'imposition des rapports de vitesses. Le signal de sortie A ou B se présente sous la forme d'une tension continue qui ne peut prendre que deux valeurs correspondant respectivement à la valeur «1» proche d'une tension de référence qui est l'image d'un rapport de boîte d'ordre n, et la valeur «O» proche de la tension nulle qui est l'image du rapport de boîte d'ordre n + 1, avec des fronts de transition du niveau haut «1» vers le niveau bas «O» au passage montant des vitesses et/ou du niveau bas «O» vers le niveau haut «1» au passage en rétrogradation des vitesses qui sont très courts par rapport à la période d'évolution des changements de rapports de transmission.

Le dispositif périodemètre représenté sur la fig. 8 a déjà fait l'objet de descriptions partielles dans les brevets français 1 457 550, intitulé «Gouverneur de commande en fonction de la fréquence et d'au moins un paramètre auxiliaire» et 2 268 268 intitulé «Circuit tachymétrique à plusieurs états» auxquels on pourra se référer.

Ce dispositif est constitué par un générateur/comparateur de temps 42 qui compare la période du signal vitesse véhicule 38 obtenu par le circuit différentiateur positif 41 à la durée d'un signal autogénéré par le bloc 42 qui est proportionnelle à la valeur de la tension donnée par le générateur de seuil 43 et inversement proportionnelle à l'intensité fournie par le générateur de courant 40 piloté par le signal de charge moteur 39. La bascule bistable 45 connectée à la sortie du générateur/comparateur de temps 42 mémorise le résultat de la comparaison autorisant la prise des différents rapports de vitesses lorsque la porte de blocage 46 commandée par l'interrupteur 8 ou 10 d'imposition des vitesses est ouvert et le permet. Dans le cas du périodemètre 11 qui commande les deuxième et troisième rapports de transmission, la fermeture de l'interrupteur 10 par l'intermédiaire de la porte de blocage 46 positionne impérativement la bascule 45 dans l'état «haut» du signal de sortie B qui impose le deuxième rapport de boîte et le maintient tant que l'interrupteur 10 reste fermé. Dans le cas du périodemètre 7, la commande de passage du deuxième au premier rapport de vitesses provoquée par la fermeture de l'interrupteur 8, par la liaison 48 représentée en tirets sur la fig. 8, et qui n'existe pas pour le périodemètre 11, annule l'effet de la commande de charge moteur 39 et impose une valeur de l'intensité du générateur de courant 40 produisant par le bloc 42 un temps de référence tel que la rétrogradation au premier rapport ne soit possible que si la période du signal vitesse est ou devient, par suite d'un ralentissement du véhicule, supérieure au seuil ainsi généré. Lorsque le passage en première est autorisé, le signal de sortie A devient «haut» et la sortie complémentaire $\bar{A}$ commande par la liaison 49 représentée en tirets sur la fig. 8, et qui n'existe pas pour le périodemètre 11, la porte de blocage 46 qui verrouille la bascule 45 dans l'état «haut» qui correspond au premier rapport de transmission et cela quelle que soit la vitesse véhicule tant que l'interrupteur 8 reste fermé.

Le dispositif de commande d'hystérésis 44 qui commande la tension du générateur de seuil 43 à partir du signal de sortie $\bar{A}$ ou $\bar{B}$ et de l'interrupteur de rétrocontact 9 permet d'obtenir par modification du temps de référence fourni par le bloc 42, le décalage nécessaire entre les points de passage en montant et en rétrogradant les rapports (voir fig. 4). La fermeture de l'interrupteur de rétrocontact 9 en fin de course de la pédale d'accélérateur réduit l'hystérésis du montage en diminuant davantage le temps de référence fourni par le bloc 42 au passage à un rapport d'ordre inférieur qu'au passage à un rapport d'ordre plus élevé.

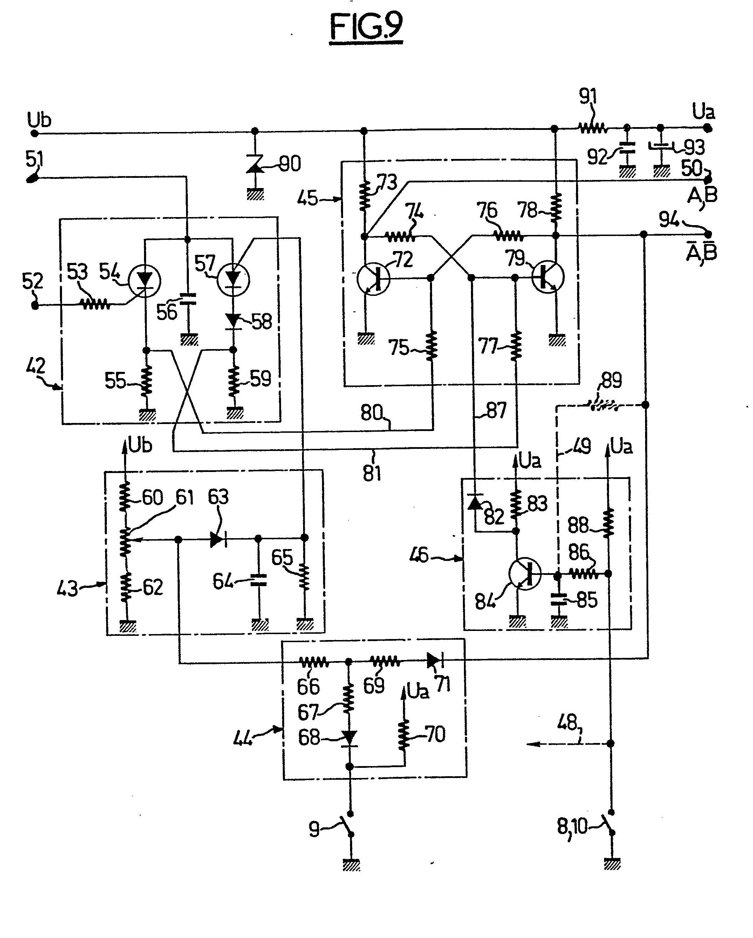

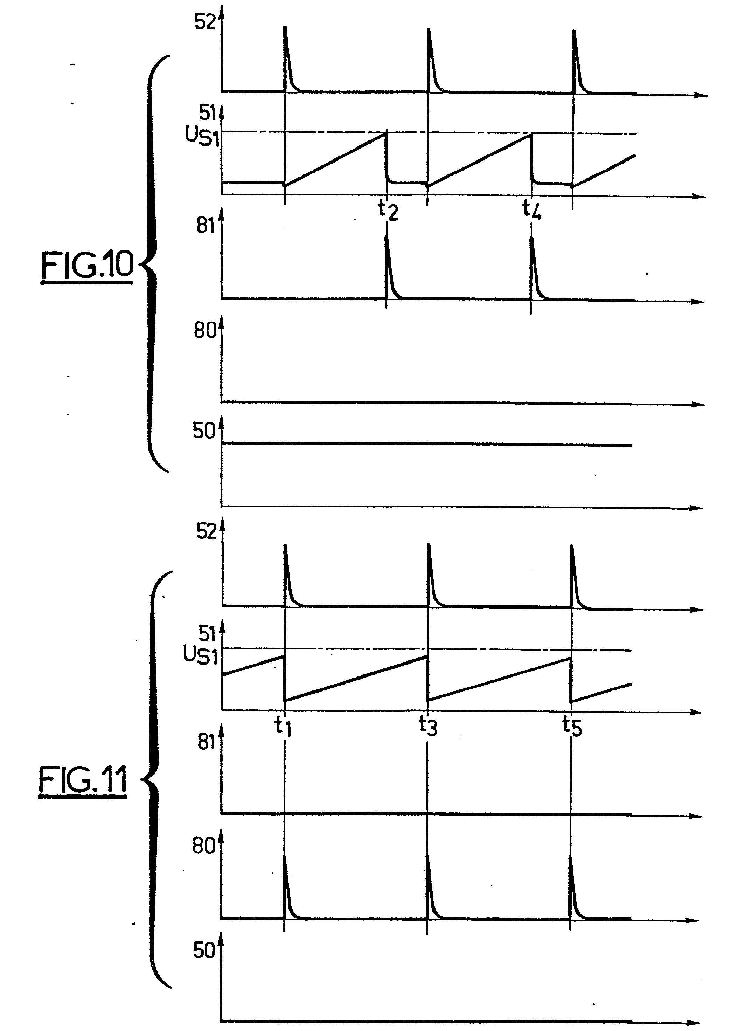

Dans le mode de réalisation de la fig. 9 illustré par les formes d'onde des figs 10 à 13, l'alimentation en tension régulée Ub du montage est disponible aux bornes de la diode Zener 90 qui est reliée à la source de tension Ua, côté cathode à travers la résistance 91 et côté anode par la masse du montage. La tension Ua est découplée par le condensateur 92 de type polyester et le condensateur 93 électrochimique de forte valeur qui atténuent les parasites provenant de la source d'alimentation Ua.

Le générateur/comparateur de temps 42 de la fig. 8 est constitué par le condensateur 56 qui se charge lentement par la liaison 51 reliée au générateur de courant 40 de la fig. 8. Le condensateur 56 peut se décharger rapidement par deux voies différentes:

– La première voie se compose du thyristor 54 à fort courant de maintien qui décharge impérativement le condensateur 56 à travers la résistance 55 et la masse du montage à chaque période du signal tachymétrique 38 de la fig. 8 lorsque le circuit dérivateur positif 41 de la fig. 8 envoie par la liaison 52 une impulsion positive de courte durée sur la gâchette du thysistor 54 à travers la résistance 53.

– La deuxième voie se compose du transistor unijonction programmable 57 à faible courant de maintien qui décharge le condensateur 56 à travers la diode 58, la résistance 59 et la masse du montage chaque fois que la tension de charge du condensateur 56 atteint la tension d'amorçage définie par les éléments du générateur de seuil 43 et de la commande d'hystérésis 44 de la fig. 8, qui fixent le potentiel de la porte du transistor unijonction 57.

Le générateur de seuil 43 est constitué d'un diviseur ajustable de tension qui comprend un potentiomètre 61, permettant de régler le seuil d'amorçage, relié par la résistance 60 à la tension Ub et par la résistance 62 à la masse du montage et dont le curseur alimente, par l'intermédiaire de la diode 63 assurant la compensation en température du seuil d'amorçage, la porte du transistor unijonction 57 qui retourne à la masse par la résistance 65 et le condensateur 64. Le rôle du condensateur 64 est de supprimer les variations brèves de la tension d'amorçage dues à la présence accidentelle d'impulsions parasites sur la porte du transistor unijonction 57.

Le bloc de commande d'hystérésis 44 relie au curseur du potentiomètre 61 par la résistance 66, d'une part l'interrupteur de rétrocontact 9 par la liaison série de la résistance 67 et de la diode 68 et, d'autre part la borne 94 dont l'état électrique Ā ou B̄ est complémentaire de celui de la borne 50 du signal de sortie A ou B, par la liaison série de la résistance 69 et de la diode 71. La résistance 70 placée entre la tension Ua et le point commun de la diode 68 et du rétrocontact 9 fixe le potentiel de la cathode de la diode 68 lorsque l'interrupteur de rétrocontact 9 est ouvert.

La plage de variation de l'intensité du générateur de courant 40 fonction de l'information charge moteur 39 de la fig. 8 est choisie de façon telle que les valeurs extrêmes restent inférieures au fort courant de maintien du thyristor 54 et supérieures au faible courant de maintien du transistor unijonction 57. De cette manière, le transistor unijonction 57 reste conducteur après son amorçage, empêchant le condensateur 56 de se recharger jusqu'à ce que le thyristor 54, en s'amorçant, lui dérive un courant suffisant pour provoquer successivement le blocage du transistor unijonction 57 puis du thyristor 54. Cette opération est facilitée par la présence de la diode 58 dans la voie de décharge du transistor unijonction 57 qui remonte d'environ 0,7 volt son potentiel d'anode pendant sa phase de conduction. Après blocage des deux éléments 54 et 57, le courant provenant du générateur 40 peut alors recharger librement le condensateur 56.

Suivant que la période du signal tachymétrique sur la borne 52 permet ou non à la tension de charge du condensateur 56 d'atteindre le seuil d'amorçage du transistor unijonction 57, une impulsion positive, courte et de forte valeur apparaît sur l'une ou l'autre des résistances 55 et 59 et est envoyée sur l'une ou l'autre des voies de commandes 80 et 81 de la bascule bistable 45 qui garde en mémoire le résultat de la comparaison jusqu'à la période suivante. Cette bascule est constituée des deux transistors NPN 72 et 79 et des résistances 73 à 78. Du collecteur du transistor 72 relié à la borne de sortie 50 part une résistance 73 allant à la ligne d'alimentation Ub et une résistance 74 allant à la base de l'autre transistor 79, tandis que du collecteur de ce transistor 79 relié à la borne 94 part une résistance 78 allant à la ligne d'alimentation Ub et une résistance 76 allant à la base du premier transistor 72. La base du transistor 72 reçoit par la liaison 80 à travers la résistance 75 les impulsions qui apparaissent au point commun de la résistance 55 et de la cathode du thyristor 54, tandis que la base du transistor 79 reçoit par la liaison 81 à travers la résistance 77 les impulsions qui apparaissent au point commun de la résistance 59 et de la cathode de la diode 58, ainsi que par la liaison 87 le signal de commande de la porte de blocage 46. Les émetteurs des transistors 72 et 79 sont tous les deux reliés à la masse du montage.

Les valeurs des résistances 74 et 76 sont choisies différentes pour qu'à la mise sous tension du montage, le transistor 72 se bloquant et le transistor 79 se saturant, la borne 50 de sortie prenne le niveau «haut» correspondant à une tension proche de Ub et la borne 94 prenne l'état complémentaire correspondant au niveau «bas» proche de la tension nulle.

Le branchement de la bascule est tel que le transistor 72 reste bloqué et le transistor 79 reste saturé lorsque la période du signal tachymétrique sur la borne 52 est supérieure à la durée du signal de référence obtenue quand la tension de charge du condensateur 56 atteint le seuil d'amorçage du transistor unijonction 57; la tension sur la borne 50 de sortie est donc «haute» lorsque la vitesse du véhicule reste inférieure au seuil fixé de changement des rapports. Au contraire, en l'absence de commande de la porte de blocage 46, le transistor 72 est saturé et le transistor 79 bloqué lorsque la période du signal tachymétrique sur la borne 52 est telle que le thyristor 54 décharge seul le condensateur 56 dont la tension ne peut pas atteindre le seuil d'amorçage du transistor unijonction 57; la tension sur la borne 50 de sortie est donc «basse» lorsque la vitesse du véhicule est supérieure au seuil fixé de changement des rapports.

L'hystérésis en fréquence nécessaire pour reproduire les courbes de la fig. 4 est assurée par le bloc de commande 44 déjà décrit précédemment qui, en fonctionnement normal lorsque l'interrupteur de rétrocontact 9 est ouvert, vient couper par blocage de la diode 71 lorsque le niveau de tension de la borne 94 devient «haut», le réseau branché en parallèle sur la partie comprise entre le curseur du potentiomètre 61 du diviseur de tension et la masse du montage par l'intermédiaire des deux résistance 66 et 69 en série, de la diode 71 et de la jonction collecteur/émetteur du transistor 79 qui était alors saturé. Il en résulte une augmentation de la valeur de la tension d'amorçage du transistor unijonction 57, le seuil de changement des vitesses passant de la valeur correspondant à la montée des rapports à une valeur supérieure correspondant à leur rétrogradation. La fermeture de l'interrupteur de rétrocontact 9 fait baisser la valeur du seuil d'amorçage du transistor unijonction 57 en ramenant le point commun des résistances 66 et 69 à la masse à travers la résistance 67 et la diode 68 rendue conductrice qui lorsque le rétrocontact 9 reste ouvert est bloquée par la polarisation inverse appliquée par la résistance 70 reliée à la tension d'alimentaion Ua. Le choix de la valeur des trois résistances 66, 67 et 69 permet d'obtenir les seuils de passage des rapports correspondant aux points «pied à fond» de la fig. 4 (facteur de charge 100%).

L'interrupteur 8 ou 10 de la commande manuelle qui agit dans le cas du périodemètre 7, par la liaison 48 sur le générateur de courant 40 non représenté sur la fig. 9 commande la porte de blocage 46 construite autour du transistor NPN 84. La résistance 88 alimentée par la source de tension Ua est branchée à l'ensemble parallèle constitué par l'interrupteur 8, 10 et par la résistance 86 reliée à la base du transistor 84. L'émetteur du transistor 84 est ramené à l'interrupteur 8, 10 par l'intermédiaire de la masse du montage et le collecteur, alimenté par la tension Ua à travers la résistance 83, est relié à la diode 82 qui commande, par la liaison 87, la bascule bistable 45. Le condensateur 85 branché en parallèle sur la jonction base émetteur du transistor 84 antiparasite la porte de blocage 46 contre les perturbations accidentelles provenant de la source d'alimentation Ua et/ou de la liaison avec l'interrupteur 8, 10.

Dans le cas du périodemètre 7 qui commande les deux premiers rapports de transmission, la porte de blocage 46 comporte une résistance supplémentaire 89 représentée en tirets, qui relie la sortie complémentaire 94 de la bascule 45 à la base du transistor 84.

Lorsque l'interrupteur 8, 10 est ouvert, les résistances 86 et 88 alimentent la base du transistor 84 qui conduit. Sa faible tension de saturation polarise dans le sens inverse la diode 82 qui par blocage de la liaison 87 permet le fonctionnement de la bascule 45 à partir des informations du générateur/comparateur de temps 42.

Dans le cas du périodemètre 11 qui commande les deuxième et troisième rapports de transmission, la fermeture de l'interrupteur 10 par mise à la masse du point commun des résistances 86 et 88 annule le courant de base du transistor 84 et le bloque. Le transistor 79 de la bascule 45 dont la jonction base/émetteur est alors alimentée sous la tension Ua par le chemin formé de la résistance 83 et de la diode 82 passante, se sature provoquant par l'intermédiaire des liaisons croisées base/collecteur formées des résistances 74 et 76 le blocage du transistor 72, ce qui a pour conséquence de positionner la borne de sortie 50 à l'état «haut» correspondant au deuxième rapport de la transmission.

Dans le cas du périodemètre 7 qui commande les premier et deuxième rapports de transmission, la fermeture de l'interrupteur 8 ne provoque pas impérativement le blocage des transistors 84 et 72 et la saturation de 79 car la liaison 49 par la résistance 89 peut maintenir le transistor 84 saturé lorsque la bascule 45 est dans l'état du deuxième rapport de transmission correspondant à un signal «haut» sur la borne 94 et autorise le pilotage de la bascule 45 à partir des informations du générateur/comparateur de temps 42. Par contre, lorsque la borne de sortie 94 de la bascule 45 passe à l'état «bas», à la prise du premier rapport, elle libère le transistor 84 dont l'état ne dépend plus que de la position de l'interrupteur 8. Lorsqu'il est fermé, l'état de première vitesse correspondant aux transistors 79 saturé et 72 bloqué est maintenu par le blocage du transistor 84. Lorsqu'il est ouvert, le fonctionnement de la bascule 45 est libéré par la saturation du transistor 84, la bascule 45 pouvant alors se positionner dans l'état du premier ou du second rapport suivant l'ordre envoyé par le générateur/comparateur de temps 42.

Pour compléter la description de fonctionnement du mode de réalisation de la fig. 9, on pourra se reporter aux figs 10 à 13 qui représentent chacune des chronogrammes de différentes situations de fonctionnement.

Sur chacune des figs 10 à 13 on a représenté en fonction du temps, les signaux d'entrée des bornes 52 et 51, les signaux apparaissant dans les deux voies 81 et 80 et le signal de sortie de la borne 50.

La fig. 10 illustre une configuration dans laquelle la fréquence du signal tachymétrique appliqué à la borne 52 et l'intensité du générateur de courant 40 relié à la borne 51 sont telles que le seuil d'amorçage $US_1$ de l'unijonction 57 étant atteint, ce dernier décharge le condensateur 56 aux instants $t_2$ et $t_4$. Les décharges successives produisent des impulsions sur la voie 81 qui placent la sortie 50 de la bascule 45 au niveau «haut» correspondant à un rapport de transmission, par exemple d'ordre n. La voie 80 reste au niveau bas.

La fig. 11 illustre une autre configuration dans laquelle la fréquence du signal tachymétrique appliqué à la borne 52 est la même que dans la fig. 10, mais où l'intensité du générateur de courant 40 prend une valeur différente plus petite que dans le cas de la fig. 10. La charge du moteur est donc plus faible. C'est alors le thyristor 54 qui décharge le condensateur 56 aux instants $t_1$, $t_3$ et $t_5$ empêchant la tension de la borne 51 d'atteindre le seuil d'amorçage $US_1$ de l'unijonction 57. Ces décharges successives produisent des impulsions sur la voie 80 qui placent la sortie 50 de la bascule 45 au niveau «bas» correspondant à un rapport de transmission d'ordre n + 1. La voie 81 reste au niveau bas.

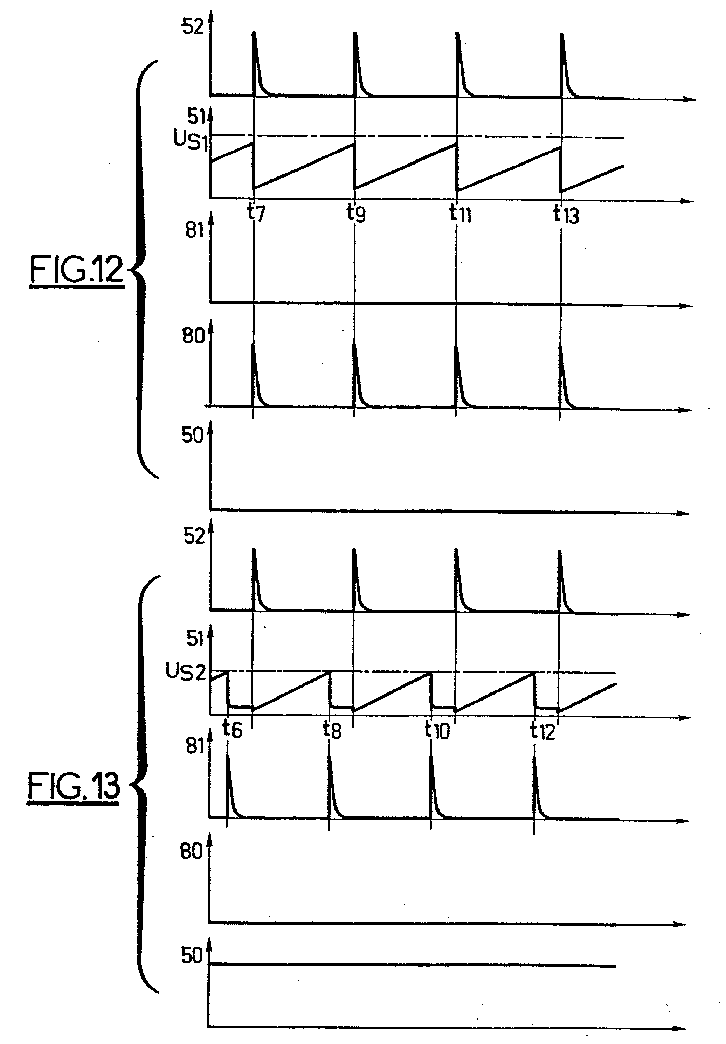

La fig. 12 illustre une configuration dans laquelle l'intensité du générateur de courant 40 a la même valeur que dans le cas de la fig. 10, mais où la fréquence du signal tachymétrique appliqué à la borne 52 est plus grande que dans le cas représenté sur la fig. 10. C'est alors le thyristor 54 qui décharge le condensateur 56 aux instants $t_7$, $t_9$, $t_{11}$ et $t_{13}$ empêchant la tension de la borne 51 d'atteindre le seuil d'amorçage $US_1$ de l'unijonction 57. Les décharges successives produisent des impulsions sur la voie 80 qui placent la sortie 50 de la bascule au niveau «bas» correspondant à un rapport de transmission, par exemple, d'ordre p. La voie 81 reste au niveau bas.

Enfin, la fig. 13 illustre une configuration dans laquelle la fréquence du signal tachymétrique et l'intensité du générateur de courant 40 sont les mêmes que dans le cas de la fig. 12 mais où, par exemple, par suite de la fermeture de l'interrupteur 9 de rétrocontact, le seuil d'amorçage du transistor unijonction 57 passe de la valeur précédente $US_1$ à la valeur $US_2$ plus faible qui, aux instants $t_6$, $t_8$, $t_{10}$ et $t_{12}$, fait conduire ce dernier et décharger le condensateur 56. Ces décharges successives produisent des impulsions sur la voie 81 qui placent la sortie 50 de la bascule 45 au niveau «haut» correspondant à un rapport de transmission d'ordre p-1. La voie 80 reste au niveau bas.

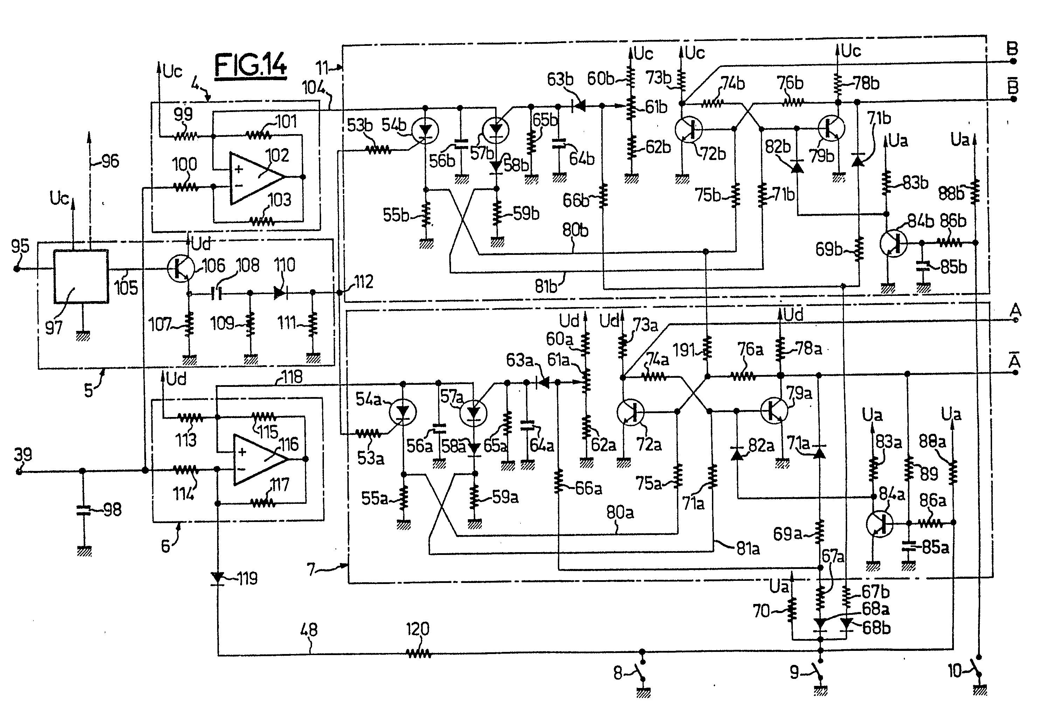

La fig. 14 représente le schéma détaillé de l'ensemble d'un circuit électronique pouvant être utilisé pour réaliser les fonctions représentées par les blocs 4, 5, 6, 7 et 11 du dispositif $G_1$ de la fig. 3. Il faut remarquer, tout d'abord, que pour simplifier la représentation du circuit, les alimentations régulées fournissant les tension Uc et Ud à partir de la source de tension Ua ne sont pas représentées. Elles sont du même type à stabilisation par résistance série et diode Zener avec découplage par condensateurs que celle reproduite sur la fig. 9 par le circuit constitué des éléments 90 à 93. On notera également que les périodemètres 7 et 11 déjà décrits en référence à la fig. 9 comprennent des éléments identiques portant les mêmes références que sur la fig. 9 affectées de l'indice «a» pour le périodemètre 7 et de l'indice «b» pour le périodemètre 11, à part la résistance 70 qui est commune aux deux périodemètres.

Le bloc fonctionnel diviseur de fréquence et différentiateur 5 qui reçoit sur la borne 95 l'information vitesse provenant du circuit électronique 3 de traitement du signal capteur $C_2$ de la fig. 3 est constitué du compteur 97 qui comprend une première sortie à fréquence moitié qui fournit par la liaison 96 au bloc 13 du dispositif $G_2$ de la fig. 3 non représenté sur la fig. 14, un signal tachymétrique D de forme carrée indépendante du rapport cyclique du signal vitesse appliqué sur 95 et une seconde sortie reliée au circuit différentiateur par la liaison 105, dont le rapport de division de fréquence est égal au nombre de dents de la cible qui tourne devant le capteur de vitesse de telle façon que le signal appliqué sur 105 présentant toujours un front montant à l'approche de la même dent, possède exactement la fréquence correspondant à la vitesse de rotation de la cible et soit indépendant des imperfections de denture. Le circuit différentiateur se compose du transistor NPN 106 monté en émetteur suiveur adaptateur d'impédance qui reçoit sur sa base, par la liaison 105, directement le signal de la seconde sortie du compteur binaire 97 et sur son collecteur, la tension de l'alimentation stabilisée Ud. L'émetteur du transistor 106 est relié à la résistance 107 et au condensateur 108 qui est branché à la résistance 109 et à la borne de sortie 112 par l'intermédiaire de la diode 110. De la borne 112 part une résistance 111 qui est reliée aux résistances 107 et 109 par la masse du montage. L'ensemble des éléments 108 à 111 constitue un circuit différentiateur positif qui permet d'obtenir sur la borne 112 d'entrée des périodemètres 7 et 11 des impulsions positives à chaque front montant du signal tachymétrique présent sur la liaison 105.

Les deux générateurs de courant 4 et 6 reçoivent par la borne 39 la tension image de la charge du moteur, venant du capteur potentiométrique $C_1$, qui est antiparasitée par la présence du condensateur 98 entre la borne 39 et la masse de montage.

Le générateur de courant 4 est réalisé au moyen de l'amplificateur opérationnel 102, de la résistance 101 de la boucle de réaction, de la résistance 103 de la boucle de contre-réaction, de la résistance d'entrée 100 entre la borne 39 et l'entrée (−) et de la résistance 99 entre la tension stabilisée Uc et l'entrée (+) de laquelle part la liaison 104 qui amène le courant fonction de la tension de la borne 39 vers le périodemètre 11.

Le générateur de courant 6 est réalisé au moyen des éléments électroniques 113 à 117 qui remplissent les mêmes fonctions que les éléments 99 à 103 du générateur de courant 4, mais qui comprend en plus la liaison 48 reliant le point commun des résistances 114, 117 et de l'entrée (−) de l'amplificateur opérationnel 116 à l'interrupteur 8 d'imposition du premier rapport de transmission à travers l'association en série de la diode 119 et de la résistance 120. De l'entrée (+) de l'amplificateur 116 par la liaison 118 qui amène le courant de sortie vers le périodemètre 7. La valeur du courant est fonction de la tension de la borne 39 lorsque l'interrupteur 8 est ouvert et pratiquement constante lorsque l'interrupteur 8 est fermé.

Enfin, on notera la présence de la résistance 191 placée entre la liaison 80b de commande de la bascule du périodemètre 11 et la base du transistor 72a de la bascule du périodemètre 7. Lorsque la vitesse du véhicule augmente, l'amplitude des impulsions de commande produites par la voie de décharge 80a du condensateur 56a comprenant le thyristor 54a, diminue et les impulsions peuvent ne plus être assez hautes pour remettre la bascule 72a, 79a du périodemètre 7 dans la bonne position à la suite d'un changement accidentel d'état dû par exemple à la présence de parasites ou à une coupure de la tension d'alimentation. La liaison par la résistance 191 permet de relancer l'état de deuxième de la bascule du périodemètre 7 de commande de changement des deux premiers rapports de transmission par les impulsions provenant de la voie de décharge du condensateur 56b par le thyristor 54b du périodemètre 11 de commande de changement des deux derniers rapports de transmission car l'amplitude de ces impulsions, par suite du décalage entre les seuils de vitesse des deux périodemètres 7 et 11 reste suffisante dans les limites de vitesse du véhicule pour piloter les deux bascules.

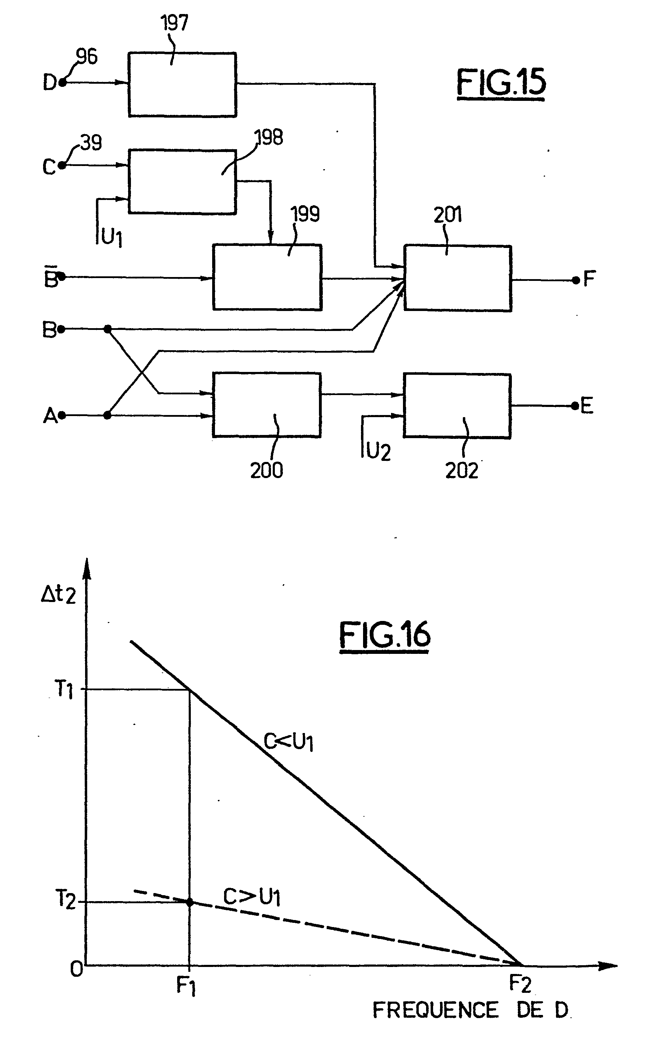

Le dispositif de commutation séquentielle $G_2$ des figs 1 et 3 qui est constitué des blocs fonctionnels 12 à 15 a déjà fait l'objet d'une précédente description dans la demande de brevet français de la demanderesse 7 828 436 déposé le 4 octobre 1978 intitulée «Dispositif de commutation séquentielle pour la commande d'une transmission automatique» auquel on pourra se référer pour plus de précision. On rappelera cependant, succinctement, à l'aide des figs 15 et 16 puis 17 et 18 les deux montages proposés.

Dans le mode de réalisation de la fig. 15, le signal de sortie E qui pilote l'électrovanne $EL_1$ de commande de changement des deux premiers rapports de transmission à travers l'amplificateur de puissance 17 de la fig. 3 est obtenu par un générateur de rampe 200 recevant les signaux A et B de sortie des deux périodemètres 7 et 11 de la fig. 3 et un comparateur de tension 202 à seuil fixe $U_2$ qui réalise la combinaison logique du bloc de traitement 15 de la fig. 3 et assure la fonction de temporisation contante $\Delta t_1$ de l'ordre de quelques centièmes de seconde représentée par les chronogrammes de la fig. 5. Le signal de sortie F qui pilote l'électrovanne $EL_2$ de commande de changement des deux derniers rapports de transmission à travers l'amplificateur de puissance 16 est obtenu par un générateur de rampe linéaire 199 recevant le complément $\bar{B}$ du signal B de sortie du périodemètre 11 et la commande de pente provenant du comparateur de tension 198 à seuil fixe $U_1$ qui détecte le niveau de tension du signal C fonction de la position de la pédale d'accélérateur apparaissant sur la borne 39 et par un comparateur de tension à seuil variable 201 recevant le signal de sortie du générateur de rampe 199, le signal A, le signal B et la tension de seuil variable en fonction de la fréquence du signal D apparaissant à la borne 96 image de la vitesse du véhicule qui provient du convertisseur fréquence/tension 197.

Cette disposition permet de réaliser la combinaison logique du bloc de traitement 14 de la fig. 3 et la fonction de temporisation $\Delta t_2$ représentée par les chronogrammes de la fig. 5. En pratique, on fixe la tension du seuil $U_1$ de façon que la tension C soit inférieure à $U_1$ lorsque le conducteur appuie sur l'accélérateur et supérieure à $U_1$ lorsqu'il a le pied levé.

En conduite automatique, le levier de sélection étant en position A, lorsque le conducteur appuie sur l'accélérateur (C < $U_1$), la temporisation $\Delta t_2$ représentée sur la fig. 16 sous la forme de la courbe en trait plein, diminue lorsque la fréquence du signal D image de la vitesse du véhicule augmente. Lorsque le conducteur a le pied levé (C > $U_1$), le gouverneur $G_1$ des figs 1 et 3 fournit un signal B de passage du troisième au deuxième rapport de transmission à la fréquence fixe $F_1$ telle que la temporisation, obtenue alors à partir de la courbe en tirets de la fig. 16 soit $T_2$.

En conduite manuelle, lorsque le conducteur passe le levier de sélection des rapports de la position A à la position 2 (troisième vitesse interdite) la valeur de la temporisation $\Delta t_2$ est obtenue soit sur la courbe en trait plein si le conducteur appuie sur laccélérateur (C < $U_1$), soit sur la courbe en tirets si le conducteur a le pied levé (C > $U_1$), la temporisation $\Delta t_2$ pouvant varier de O à $T_1$ suivant la valeur de la vitesse du véhicule correspondant à une fréquence du signal D comprise entre les fréquences $F_1$ et $F_2$ au moment de la commande manuelle du passage. On notera que la durée $\Delta t_2$ est en pratique très faible, $T_1$ étant de l'ordre de quelques dixièmes de seconde.

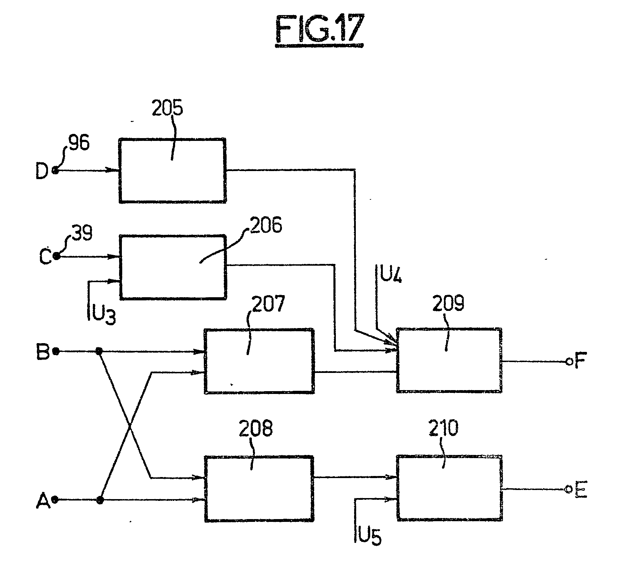

La fig. 17 montre le schéma synoptique d'un autre mode de réalisation du dispositif $G_2$ des figs 1 et 3 dans lequel le signal E est obtenu par le générateur de rampe 208 recevant les signaux d'entrée A et B et le comparateur de tension 210 à seuil fixe $U_5$. Ces deux éléments réalisent la combinaison logique des signaux A et B et assurent la fonction de temporisation $\Delta t_1$ du bloc de traitement 15 de la fig. 3. Le signal F est obtenu par le générateur de rampe 207 recevant les signaux d'entrée A et B et par le comparateur de tension à seuil contrôlé 209 recevant le signal de sortie du générateur de rampe 207, la tension de seuil fixe $U_4$ modifiée par la commande de seuil provenant du comparateur de tension 206 à seuil fixe $U_3$ qui tient compte du niveau du signal C et par la commande de seuil qui provient du comparateur de fréquence à seuils fixes 205 tenant compte de la fréquence du signal D.

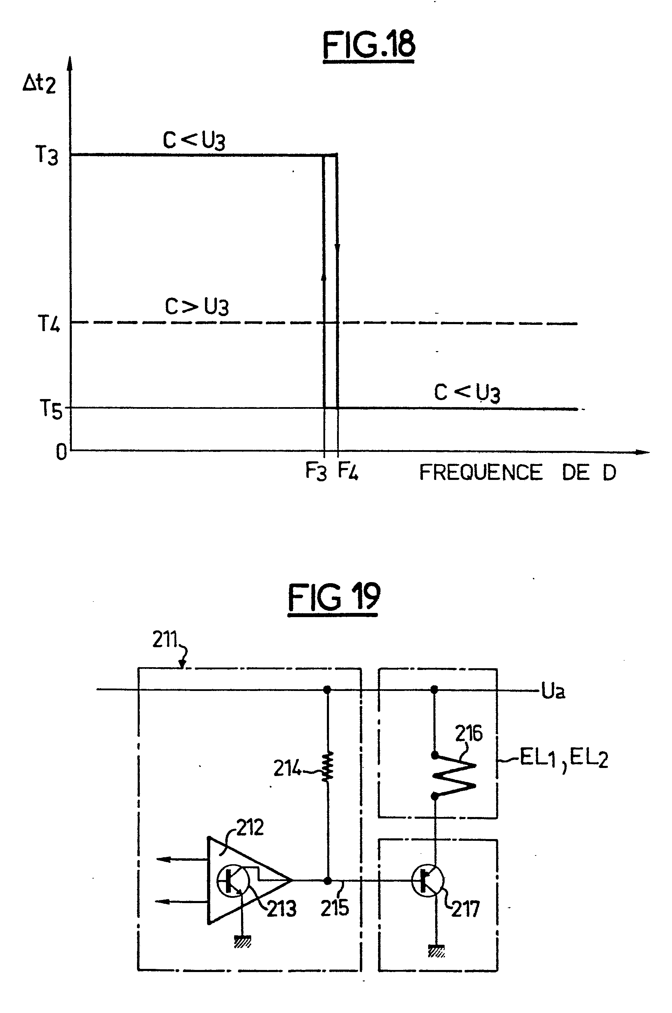

Cette disposition permet de réaliser la combinaison logique du bloc de traitement 14 de la fig. 3 et la fonction de temporisation $\Delta t_2$ à trois niveaux représentée sur la fig. 18 par la courbe en traits pleins lorsque le conducteur appuie sur l'accélérateur (C < $U_3$) et par la courbe en tirets lorsqu'il a le pied levé (C > $U_3$). Au lieu d'obtenir une variation continue de la temporisation $\Delta t_2$ comme sur la courbe de la fig. 16, on se contente ici d'une approximation qui permet en contrepartie de simplifier le circuit électronique en utilisant pour réaliser la fonction du comparateur de fréquence 205 à seuils fixes ($F_3$ et $F_4$ de la fig. 18) un dispositif de même type que celui réalisé par les blocs 42 et 45 de la fig. 9. Les trois circuits ainsi unifiés peuvent être avantageusement reproduits sous forme modulaire par exemple en utilisant les techniques des circuits hybrides en couches minces ou couches épaisses.

Les étages de puissance 16 et 17 de la fig. 3 sont réalisés de manière identique comme le montre la fig. 19, par un transistor de puissance PNP 217 dont la charge placée entre son émetteur et la source d'alimentation Ua est constituée par la bobine 216 de l'électrovanne $EL_1$ de commande des changements des deux premiers rapports de la transmission ou de l'électrovanne EL$_2$ qui commande les changements des deux derniers rapports. La base du transistor 217 est reliée à la sortie 215 du bloc fonctionnel 211 correspondant à l'étage final des ensembles de traitement 14 et 15 de la fig. 3 réalisé de façon semblable par un amplificateur opérationnel 212 qui possède un transistor NPN à collecteur ouvert 213 alimenté par la tension Ua à travers la résistance 214. Par ailleurs, le collecteur du transistor 217 est relié à la masse du montage.

Cette disposition présente plusieurs avantages. Elle facilite le refroidissement des transistors de puissance 217 car les deux collecteurs qui sont généralement reliés électriquement aux radiateurs des transistors sont disposés sans précaution particulière sur le même dissipateur thermique qui peut être en contact avec la masse du véhicule. Aucune diode de récupération n'est plus nécessaire en parallèle sur l'électrovanne EL$_1$ ou EL$_2$ pour assurer la protection des transistors 217 car lorsque la coupure du courant dans l'électrovanne se produit, la surtension développée à ses bornes par effet selfique rend la jonction base/émetteur conductrice et crée un courant émetteur/base à travers la résistance 214 qui rend le transistor 217 conducteur tant que l'énergie de la self n'est pas dissipée. On notera l'inconvénient de la présence de cette diode de récupération qui viendrait, en cas d'inversion de tension par mauvais branchement de la batterie court-circuiter l'électrovanne et provoquer la destruction du transistor de puissance 217. Enfin, les courts-circuits à la masse des connexions reliant les étages de puissance du boîtier électronique aux électrovannes, qui sont souvent éloignés l'un de l'autre, sont sans danger pour les circuits du boîtier électronique.

**Revendications**

1. Dispositif électronique de commande des changements de rapports de vitesses pour une transmission automatique de véhicule automobile à trois rapports de marche avant à passage sous couple et une marche arrière, la transmission étant pilotée par un circuit hydraulique comportant deux électrovannes de commande, à partir d'informations dépendant de la marche du véhicule et en particulier, de la position de la pédale d'accélérateur correspondant à la charge du moteur, de la vitesse du véhicule, de la position d'un organe manuel de commande imposant certains rapports de transmission et d'un rétrocontact de fin de course de la pédale d'accélératuer, caractérisé par le fait qu'il comprend en combinaison: un dispositif gouverneur électronique (G$_1$) recevant les informations précitées et comprenant un premier périodemètre (7) fournissant un signal (A) pour la commande du passage du premier rapport de la transmission au deuxième rapport et vice versa et un deuxième périodemètre (11) fournissant un signal (B) pour la commande du passage du deuxième rapport de la transmission au troisième rapport et vice versa, chaque périodemètre comparant la durée de la période d'un signal correspondant à la vitesse du véhicule avec la durée d'un signal de référence correspondant à la charge du moteur, le dispositif (G$_1$) fournissant en outre un signal (D) dont la fréquence correspond à la vitesse du véhicule; et un dispositif (G$_2$) de commutation séquentielle recevant les signaux émis par le dispositif gouverneur électronique (G$_1$) et fournissant un premier signal de commande (E) pour la première électrovanne (EL$_1$) avec une temporisation constante (Δt$_1$) et un deuxième signal de commande (F) pour la deuxième électrovanne (EL$_2$) avec une temporisation variable (Δt$_2$) dont la durée dépend des signaux correspondants à la vitesse du véhicule (D) et à la charge du moteur (C).

2. Dispositif électronique selon la revendication 1, caractérisé par le fait qu'il comprend en outre deux interrupteurs (8, 10) commandés par la position de l'organe manuel de commande, imposant respectivement le premier rapport de la transmission et les premier ou deuxième rapports de la transmission ainsi qu'un interrupteur de rétrocontact (9) lesdits interrupteurs permettant une action impérative sur les deux périodemètres.

3. Dispositif électronique de commande selon les revendications 1 ou 2, caractérisé par le fait que le premier périodemètre (7) pour la commande du passage du premier rapport de transmission au deuxième rapport et vice versa reçoit le signal de sortie d'un générateur de courant relié au détecteur de la charge du moteur, ledit générateur de courant étant en outre relié à l'interrupteur (8) d'imposition du premier rapport de la transmission.

4. Dispositif électronique de commande selon les revendications 1 ou 2, caractérisé par le fait que le deuxième périodemètre (11) pour la commande du passage du deuxième rapport de la transmission au troisième rapport et vice versa reçoit le signal de sortie d'un générateur de courant relié au détecteur de la charge du moteur.

5. Dispositif électronique de commande selon l'une quelconque des revendications précédentes, caractérisé par le fait qu'il comprend un capteur de la position de la pédale d'accélérateur constitué par un potentiomètre entraîné en rotation par l'axe du papillon du carburateur.

6. Dispositif électronique de commande selon l'une quelconque des revendications précédentes, caractérisé par le fait qu'il comprend pour détecter la vitesse du véhicule un capteur de déplacement d'un organe rotatif ferromagnétique crénelé dont la rotation est représentative de la vitesse du véhicule, la détection se faisant à l'aide d'une bobine d'induction placée à proximité dudit organe rotatif et alimentée en courant alternatif à haute fréquence, le capteur étant adapté pour effectuer une détection positive suivie d'une amplification non inverseuse.

7. Dispositif électronique de commande selon l'une quelconque des revendications 1 à 5, caractérisé par le fait qu'il comprend pour détecter la vitesse du véhicule, un capteur de déplacement d'un organe rotatif ferromagnétique crénelé dont la rotation est représentative de la vitesse du véhicule, la détection se faisant à l'aide d'un aimant permanent en contact avec un noyau de fer doux, l'ensemble étant partiellement recouvert d'un bobinage et placé au voisinage des créneaux dudit organe rotatif avec un faible entrefer de façon à obtenir dans le bobinage une force électromotrice d'induction.

8. Dispositif électronique de commande selon les revendications 6 ou 7, caractérisé par le fait que le capteur de déplacement est associé à un circuit de traitement comprenant un dispositif intégrateur fournissant la valeur moyenne du signal basse fréquence amplifié et un amplificateur différentiel dont les deux entrées sont alimentées respectivement par le signal basse fréquence amplifié et par ladite valeur moyenne, et un détecteur de seuil relié à l'amplificateur différentiel pour fournir un signal rectangulaire.

9. Dispositif électronique de commande selon l'une quelconque des revendications 6 à 8, caractérisé par le fait qu'il comprend un dispositif diviseur de fréquence et différentiateur (5) recevant l'information vitesse du véhicule après traitement, relié aux deux périodemètres précités et dont le rapport de division de fréquence est égal au nombre de créneaux dudit organe rotatif crénelé, éliminant ainsi l'influence éventuelle des imperfections des créneaux.

10. Dispositif électronique de commande selon l'une quelconque des revendications précédentes, caractérisé par le fait que chaque périodemètre comprend un générateur/comparateur de temps (42) qui compare la période du signal vitesse du véhicule à la durée d'un signal qu'il génère et qui est proportionnel à une tension fournie par un générateur de seuil et inversement proportionnel à l'intensité d'un générateur de courant piloté par le signal correspondant à la charge du moteur, et une bascule bistable mémorisant le résultat de la comparaison.

11. Dispositif électronique de commande selon la revendication 10, caractérisé par le fait que chaque périodemètre comprend en outre une porte de blocage (46) pour imposer le niveau de sortie de la bascule bistable (45), ladite porte de blocage comprenant un transistor relié par sa base à l'interrupteur (8, 10) précité et commandant l'état d'une diode reliée à la bascule bistable de manière à bloquer son fonctionnement selon la position de l'interrupteur et éventuellement de l'état de la sortie complémentaire de la bascule bistable.

12. Dispositif électronique selon les revendications 10 ou 11, caractérisé par le fait que le périodemètre (7) pour la commande du passage du premier rapport de la transmission au deuxième rapport et vice versa comprend en outre une liaison (48) entre l'interrupteur imposant le premier rapport de la transmission et le générateur de courant relié au capteur de la charge du moteur qui impose la valeur de l'intensité produite.

13. Dispositif électronique de commande selon l'une quelconque des revendications 10 à 12, caractérisé par le fait que le générateur/comparateur de temps (42) comprend un condensateur (56) chargé par un signal provenant du générateur de courant piloté par le signal correspondant à la charge du moteur et pouvant se décharger par deux voies différentes, la première voie comprenant un thyristor à fort courant de maintien actionné à chaque période du signal correspondant à la vitesse du véhicule, la deuxième voie comprenant un transistor unijonction programmable à faible courant de maintien devenant passant chaque fois que la tension de charge du condensateur atteint une tension d'amorçage définie par le générateur de seuil (43), chacune des voies étant reliée à une entrée de commande de la bascule bistable (45).

14. Dispositif électronique de commande selon la revendication 13, caractérisé par le fait que le générateur de seuil (43) comprend un diviseur ajustable de tension relié à la porte du transistor unijonction précité.

15. Dispositif électronique de commande selon l'une quelconque des revendications 10 à 14, caractérisé par le fait qu'il comprend en outre un dispositif de commande d'hystérésis (44) comprenant une diode reliant la sortie complémentaire (94) de la bascule bistable (45) au générateur de seuil (43) de façon à augmenter la valeur de la tension d'amorçage du transistor unijonction précité faisant ainsi passer le seuil de changement de vitesse de la valeur correspondant à la montée des rapports à la valeur correspondant à la rétrogradation des rapports.

16. Dispositif électronique de commande selon l'une quelconque des revendications 10 à 15, caractérisé par le fait que les bascules respectives des deux périodemètres précités sont reliées entre elles de façon que les impulsions de commande de la bascule du deuxième périodemètre (11) pour la commande du passage du deuxième rapport de la transmission au troisième rapport et vice versa puisse également commander le premier périodemètre (7) dans le cas où les impulsions de commande de ce dernier sont d'amplitude trop faible.

17. Dispositif électronique de commande selon l'une quelconque des revendications précédentes, caractérisé par le fait que le dispositif ($G_2$) de commutation séquentielle comprend un premier bloc de traitement muni d'un générateur de rampe (200) recevant les signaux de passage (A, B) issus du dispositif gouverneur électronique ($G_1$) et connecté à un comparateur de tension à seuil fixe (202) définissant le premier signal de commande (E) pour la première électrovanne ($EL_1$) avec une temporisation constante ($\Delta t_1$).

18. Dispositif électronique de commande selon l'une quelconque des revendications précédentes, caractérisé par le fait que le dispositif ($G_2$) de commutation séquentielle comprend un deuxième bloc de traitement muni d'un générateur de rampe linéaire (199) qui reçoit le signal inverse ($\bar{B}$) du deuxième signal de seuil de passage issu du dispositif gouverneur électronique ($G_1$) et un signal provenant d'un comparateur de tension à seuil fixe (198) alimenté par le signal (C) fonction de la position de la pédale d'accélérateur de façon à définir la pente de la rampe générée.

19. Dispositif électronique de commande selon la revendication 18, caractérisé par le fait que le deuxième bloc de traitement comprend en outre un comparateur de tension à seuil variable (201) recevant une tension image de la fréquence du signal (D) fonction de la vitesse du véhicule, le signal de sortie du générateur de rampe linéaire précité (199) et les deux signaux de seuil de passage (A, B) issus du dispositif gouverneur électronique (G₁).

20. Dispositif électronique de commande selon l'une quelconque des revendications 1 à 17, caractérisé par le fait que le dispositif (G₂) de commutation séquentielle comprend un deuxième bloc de traitement muni d'un générateur de rampe (207) recevant les deux signaux de seuil de passage (A, B) issus du dispositif gouverneur électronique (G₁).

21. Dispositif électronique de commande selon la revendication 20, caractérisé par le fait que le dispositif (G₂) de commutation séquentielle comprend en outre un comparateur de fréquence à seuils fixes (205) recevant le signal de fréquence (D) fonction de la vitesse du véhicule, un comparateur de tension à seuil contrôlé (209) recevant le signal de sortie du générateur de rampe précité (207) ainsi que les signaux de sortie d'un comparateur de tension à seuil fixe (206) traitant le signal (C) fonction de la position de la pédale d'accélérateur et le signal de sortie du comparateur de fréquence à seuils fixes (205) traitant le signal de fréquence (D) fonction de la vitesse du véhicule.

22. Dispositif électronique de commande selon l'une quelconque des revendications précédentes, caractérisé par le fait qu'il comprend deux étages de puissance recevant respectivement les signaux de sortie (E) et (F) issus du dispositif (G₂) de commutation séquentielle chacun desdits étages de puissance comprenant un transistor de puissance (217) dont la charge, placée entre l'émetteur et la source d'alimentation est constitué par la bobine (216) de l'électrovanne respective, son collecteur étant par ailleurs relié à la masse et sa base à la sortie d'un amplificateur avec interposition d'une résistance (214) montée en parallèle et reliée à la source d'alimentation.

**Claims**

1. An electronic speed ratio change control device for an automatic transmission for an automotive vehicle with three forward drive ratios changed under torque and a reverse drive, the transmission being controlled by a hydraulic circuit comprising two control solenoid or electric valves on the basis of data depending on the running of the vehicle and in particular on the position of the accelerator pedal corresponding to the engine load, on the vehicle speed, on the position of a manual control member imposing certain transmission ratios and on an accelerator pedal-release actuated limit switch, characterized in that it comprises in combination: an electronic governor device (G₁) receiving the above-mentioned data and comprising a first periodmeter (7) supplying a signal (A) for the control of the change from the first transmission ratio to the second ratio and vice versa and a second periodmeter (11) supplying a signal (B) for the control of the change from the second transmission ratio to the third and vice versa, with each periodmeter comparing the duration of the period of a signal corresponding to the speed of the vehicle with the duration of a reference signal corresponding to the engine load, with the device (G₁) also supplying a signal (D) the frequency of which corresponds to the vehicle speed; and a sequential switching device (G₂) receiving the signals transmitted by the electronic governor (G₁) and supplying a first control signal (E) for the first electrically-operated valve (EL₁) with a constant time delay ($\Delta t_1$) and a second control signal (F) for the second electrically operated valve (EL₂) with a time delay ($\Delta t_2$) the duration of which depends on the signals corresponding to the speed of the vehicle (D) and to the engine load (C).

2. The electronic device according to claim 1, characterized in that it also comprises two switches (8, 10) controlled by the position of the manual control member, imposing respectively the first ratio fo the transmission and the first or second transmission ratios as well as a pedal release switch (9), which switches allow overriding action on the two periodmeters.

3. The electronic control device according to claims 1 or 2, characterized in that the first periodmeter (7) for the change from the first transmission ratio to the second ratio and vice versa receives the output signal from a current generator connected to the engine load sensor, which current generator is also connected to the switch (8) imposing the first transmission ratio.

4. The electronic control device according to claims 1 or 2, characterized in that the second periodmeter (11) for controlling the change from the second transmission ratio to the third and vice versa receives the output signal from a current generator connected to the engine load sensor.

5. The electronic control device according to any of the preceding claims, characterized in that it comprises an accelerator pedal position sensor consisting of a potentiometer driven in rotation by the spindle of the carburettor throttle valve.

6. The electronic control device according to any of the preceding claims, characterized in that it comprises, for sensing the speed of the vehicle, a sensor sensing the movement of a toothed ferromagnetic rotary member the rotation of which is representative of the vehicle speed, with sensing being carried out by means of an inductor winding placed close to the said rotary member and supplied with high-frequency alternating current, the sensor being designed to carry out positive sensing followed by non-inverting amplification.

7. The electronic control device according to any of claims 1 to 5, characterized in that it comprises, for sensing the vehicle speed, a sensor sensing the movement of a toothed ferromagnetic rotary member the rotation of which is representative of the speed of the vehicle, with sensing being carried out by means of a permanent magnet in contact with a soft iron core, the whole being partly covered with a winding and placed close to the teeth of the said rotary member with a small gap so that an inductive electromotive force is obtained in the winding.

8. The electronic control device according to claims 6 or 7, characterized in that the movement sensor is combined with a processing circuit comprising an integrating device supplying the mean value of the amplified low-frequency signal and a differential amplifier the two inputs of which are fed respectively with the amplified low-frequency signal and with the said mean value, and a threshold detector connected to the differential amplifier to supply a rectangular signal.

9. The electronic control device according to any one of claims 6 to 8, characterized in that it comprises a frequency-divider and differentiator device (5) receiving the vehicle speed data after processing, connected to the two above-mentioned periodmeters and having a frequency division ratio which is equal to the number of teeth on the said toothed rotary member, thus eliminating any influence from tooth imperfections.

10. The electronic control device according to any one of the preceding claims, characterized in that each periodmeter comprises a time generator/comparator (42) which compares the period of the vehicle speed signal with the duration of a signal which it generates and which is proportional to a voltage supplied by a threshold generator and inversely proportional to the current of a current generator driven by the signal corresponding to the engine load, and a bistable multivibrator storing the result of the comparison.

11. The electronic control device according to claim 10, characterized in that each periodmeter also comprises a blocking gate (46) to impose the output level of the bistable multivibrator (45), with the said blocking gate comprising a transistor connected via its base to the above-mentioned switch (8, 10) and controlling the state of a diode connected to the bistable multivibrator in such a way as to block its operation in accordance with the position of the switch and, if the case arises, the state of the complementary output of the bistable multivibrator.

12. The electronic device according to claims 10 or 11, characterized in that the periodmeter (7) for the control of the change from the first transmission ratio to the second ratio and vice versa also comprises a connection (48) between the switch imposing the first transmission ratio and the current generator connected to the engine load sensor which imposes the value of the produced current.

13. The electronic control device according to any of claims 10 to 12, characterized in that the time generator/comparator (42) comprises a capacitor (56) charged by a signal from the current generator driven by the signal corresponding to the engine load and able to discharge via two different paths, with the first path comprising a thyristor with a high holding current turned on at each period of the signal corresponding to the vehicle speed, with the second path comprising a programmable unijunction transistor with low holding current which becomes conducting each time the capacitor charging current reaches a striking voltage defined by the threshold generator (43) and with each of the paths being connected to a control input of the bistable multivibrator (45).

14. The electronic control device according to claim 13, characterized in that the threshold generator (43) comprises an adjustable voltage divider connected to the gate of the above-mentioned unijunction transistor.

15. The electronic control device according to any one of claims 10 to 14, characterized in that it also comprises a hysteresis control device (44) comprising a diode connecting the complementary output (94) of the bistable multivibrator (45) to the threshold generator (43) so as to increase the value of the striking voltage of the above-mentioned unijunction transistor thus shifting the speed change threshold from the value corresponding to changing up ratios to the value corresponding to changing down ratios.

16. The electronic control device according to any one of claims 10 to 15, characterized in that the respective multivibrators of the two above-mentioned periodmeters are connected to each other in such a way that the pulses driving the multivibrator of the second periodmeter (11) for operating the change from the second transmission ratio to the third ratio and vice versa can also operate the first periodmeter (7) if the latter's control pulses have too small an amplitude.

17. The electronic control device according to any of preceding claims, characterized in that the sequential switching device (G₂) comprises a first processing unit provided with a sweep generator (200) receiving the changeover signals (A, B) from the electronic governor device (G₁) and connected to a fixed threshold voltage comparator (202) defining the first control signal (E) for the first electrically-operated valve (EL₁) with a constant time delay (Δt₁).

18. The electronic control device according to any of the preceding claims, characterized in that the sequential switching device (G₂) comprises a second processing unit provided with a linear sweep generator (199) which receives the inverse signal (B̄) of the second change threshold signal coming from the electronic governor device (G₁) and a signal from a fixed threshold voltage comparator (198) fed by the signal (C) that is a function of the position of the accelerator pedal so as to define the slope of the generated ramp.

19. The electronic control device according to claim 18, characterized in that the second processing unit comprises also a variable threshold voltage comparator (201) receiving a voltage which is the image of the frequency of the signal (D) which is a function of the vehicle speed, the output signal from the above-mentioned sweep generator (199) and the two change threshold signals (A, B) from the electronic governor device (G₁).

20. The electronic control device according to any one of claims 1 to 17, characterized in that the sequential switching unit (G₂) comprises a second processing unit provided with a sweep generator (207) receiving the two change threshold signals (A, B) from the electronic governor (G₁).

21. The electronic control device according to claim 20, characterized in that the sequential switching device (G₂) also comprises a fixed threshold frequency comparator (205) receiving the frequency signal which is a function of the vehicle speed, a controlled threshold voltage comparator (209) receiving the output signal from the above-mentioned sweep generator (207) and also the output signals from a fixed threshold voltage comparator (206) processing the signal (C) which depends on the position of the accelerator pedal and the output signal from the fixed threshold frequency comparator (205) processing the frequency signal (D) which depends on the vehicle speed.

22. The electronic control device according to any of the preceding claims, characterized in that it comprises two power stages respectively receiving the output signals (E) and (F) coming from the sequential switching device (G₂) with each of the said power stages comprising a power transistor (217) whose load, located between the emitter and the power supply source, consists fo the coil of the respective electrically-operated valve, its collector also being connected to earth (ground) and its base to the output of an amplifier, with a resistor (214) being placed in between, connected in parallel and connected to the power supply source.

**Patentansprüche**

1. Elektronische Vorrichtung zur Steuerung der Gangwechsel für ein automatisches Getriebe bei Kraftfahrzeugen mit drei ohne Drehmomentunterbrechung schaltbaren Übersetzungsstufen für Vorwärtsbewegung und einem Rückwärtsgang, wobei die Übersetzung durch einen zwei elektrische Steuerventile aufweisenden hydraulischen Kreislauf gesteuert wird, aufgrund von Informationen, die abhängig sind vom Betrieb des Kraftfahrzeugs und insbesondere von der der Motorbelastung entsprechenden Stellung des Gaspedals, von der Geschwindigkeit des Kraftfahrzeugs, von der Stellung eines das Übersetzungsverhältnis beeinflussende, manuell zu betätigenden Steuerorgans und von einem am Ende des Gaspedalhubs liegenden Retrokontakts, gekennzeichnet dadurch, dass er aus folgender Kombination besteht: einer elektronischen Steuervorrichtung (G₁), die die oben genannten Informationen empfängt und die ein erstes Periodenmeter (7) enthält, das ein Signal (A) für die Steuerung des Gangwechsels vom ersten in den zweiten Gang und umgekehrt sendet und ein zweites Periodenmeter (11), das ein Signal (B) für die Steuerung des Gangwechsels vom zweiten in den dritten Gang und umgekehrt sendet, wobei jedes Periodenmeter die Dauer der Periode eines der Geschwindigkeit des Kraftfahrzeugs entsprechenden Signals mit der Dauer eines der Belastung des Motors entsprechenden Referenzsignals vergleicht, wobei die Vorrichtung (G₁) ausserdem ein Signal (D) sendet, dessen Frequenz der Geschwindigkeit des Kraftfahrzeugs entspricht; und einer sequentiellen Schaltvorrichtung, die die von der elektronischen Steuervorrichtung (G₁) gesendeten Signale empfängt, und die ein erstes Steuersignal (E) für das erste Elektroventil (EL₁) mit konstanter Verzögerung (Δt₁) und ein zweites Steuersignal (F) für das zweite Elektroventil (EL₂) mit variabler Verzögerung (Δt₂) sendet, dessen Dauer der Geschwindigkeit des Kraftfahrzeugs (D) und der Belastung des Motors (C) entsprechenden Signalen abhängig ist.

2. Elektronische Vorrichtung gemäss Anspruch 1, gekennzeichnet dadurch, dass sie ausserdem aus zwei Unterbrechern (8, 10) besteht, die durch die Stellung des manuell zu betätigenden Steuerorgans aktiviert werden, welches jeweils die erste Übersetzung des Getriebes oder die zweite oder dritte Übersetzung des Getriebes zwingt, sowie aus einem Retrokontakt-Schalter (9), wobei die genannten Unterbrecher eine zwingende Einwirkung auf beide Periodenmeter ermöglichen.

3. Elektronische Vorrichtung gemäss der Ansprüche 1 oder 2, gekennzeichnet dadurch, dass das erste Periodenmeter (7) für die Steuerung des Gangwechsels vom ersten in den zweiten Gang und umgekehrt das Ausgangssignal eines mit dem Motorbelastungssensor gekoppelten Stromerzeugers empfängt, wobei der genannte Stromerzeuger ausserdem mit dem für den ersten Getriebegang vorgesehenen Unterbrecher (8) verbunden ist.

4. Elektronische Steuervorrichtung gemäss der Ansprüche 1 oder 2, gekennzeichnet dadurch, dass das zweite Periodenmeter (11) für die Steuerung des Gangwechsels vom zweiten in den dritten Gang und umgekehrt das Ausgangssignal eines mit dem Motorbelastungssensor gekoppelten Stromerzeugers empfängt.

5. Elektronische Steuervorrichtung gemäss einem der vorstehenden Ansprüche, gekennzeichnet dadurch, dass sie mit einem die Stellung des Gaspedals registrierenden Sensor ausgerüstet ist, der aus einem von der Welle der Drosselklappe des Vergasers in Drehbewegung versetzten Potentiometer besteht.

6. Elektronische Steuervorrichtung gemäss einem der vorstehenden Ansprüche, gekennzeichnet dadurch, dass sie für das Erfassen der Geschwindigkeit des Kraftfahrzeugs einen Bewegungssensor aus einem gezahnten, ferromagnetischen Rotationsorgan aufweist, dessen Drehbewegung der Geschwindigkeit des Kraftfahrzeugs entspricht, wobei das Erfassen der Geschwindigkeit mit Hilfe einer neben dem genannten Rotationsorgan montierten, von Hochfrequenz-Wechselstrom gespeisten Induktionsspule geschieht, wobei der Sensor adaptiert ist, um eine Positiv-Erfassung, gefolgt von einer nicht invertierten Verstärkung, auszuführen.

7. Elektronische Steuervorrichtung gemäss einem der Ansprüche 1 bis 5, gekennzeichnet dadurch, dass sie für das Erfassen der Geschwindigkeit des Kraftfahrzeugs einen Bewegungssensor aus einem gezahnten, ferromagnetischen Rotationsorgan aufweist, wobei die Erfassung mit Hilfe eines Dauermagneten geschieht, der in Kontakt ist mit einem Weicheisenkern, wobei das Ganze teilweise mit einer Wicklung versehen und bei den Zähnen des genannten Rotationsorgans plaziert ist mit einem geringen Luftspalt, so dass in der Wicklung eine elektromotorische Induktion erzeugt werden kann.

8. Elektronische Steuervorrichtung gemäss der Ansprüche 6 oder 7, gekennzeichnet dadurch, dass der Bewegungssensor einem Datenverarbeitungskreislauf zugeordnet ist, der aus einer Integriervorrichtung besteht, die einen Durchschnittswert des verstärkten Niederfrequenzsignals sendet, und aus einem Differentialverstärker, dessen zwei Eingängen jeweils das verstärkte Niederfrequenzsignal und der genannte Durchschnittswert zugeführt werden, und aus einem mit dem Differentialverstärker verbundenen Schwellenmessgerät, um ein rektangulares Signal zu erhalten.

9. Elektronische Steuervorrichtung gemäss einem der Ansprüche 6 bis 8, gekennzeichnet dadurch, dass sie aus einem Frequenzdivisor und -differenzierer (5) besteht, der die verarbeitete Information Fahrzeuggeschwindigkeit empfängt und mit beiden vorstehenden Periodenmetern gekoppelt ist, und dessen Frequenzteilungsverhältnis gleich der Anzahl der Zähne des genannten Rotationsorgans ist, wobei auf diese Weise eventuelle aus den Unregelmässigkeiten der Zähne resultierende Einflüsse ausgeschlossen werden.

10. Elektronische Steuervorrichtung gemäss einem der vorstehenden Ansprüche, gekennzeichnet dadurch, dass jedes Periodenmeter einen Impulsgenerator/Zeitvergleicher enthält (42), der die Periode des Signals Fahrzeuggeschwindigkeit mit der Dauer eines selbsterzeugten Signals vergleicht, das proportional zu einer von einem Schwellengenerator erzeugten Spannung und umgekehrt proportional zur Stromstärke eines Stromerzeugers ist, der von dem der Motorbelastung entsprechenden Signal gesteuert wird, sowie eine bistabile Kippschaltung, die das Ergebnis des Vergleichs speichert.

11. Elektronische Steuervorrichtung gemäss Anspruch 10, gekennzeichnet dadurch, dass jedes Periodenmeter ausserdem ein Sperrtor (46) enthält, um das Ausgangsniveau der bistabilen Kippschaltung (45) zu regulieren, wobei das genannte Sperrtor aus einem Transistor besteht, der über seine Basis mit dem vorstehend genannten Unterbrecher (8, 10) verbunden ist, und der den Zustand einer Diode steuert, die mit der bistabilen Kippschaltung verbunden ist, um sowohl dessen Funktion, je nach Position des Unterbrechers, zu unterbrechen, als auch gegebenenfalls den Zustand des Komplementärausgangs der bistabilen Kippschaltung zu steuern.

12. Elektronische Vorrichtung gemäss der Ansprüche 10 oder 11, gekennzeichnet dadurch, dass das Periodenmeter (7) für den Gangwechsel vom ersten in den zweiten Gang oder umgekehrt ausserdem eine Verbindung (48) zwischen den ersten Getriebegang determinierenden Unterbrecher und dem mit dem Motorbelastungssensor verbundenen, den erzeugten Wert der Stromstärke determinierenden Stromerzeuger aufweist.

13. Elektronische Steuervorrichtung gemäss einem der Ansprüche 10 bis 12, gekennzeichnet dadurch, dass der Impulsgenerator/Zeitvergleicher (42) aus einem Kondensator (56) besteht, der mit einem vom Stromerzeuger kommenden Signal geladen wird, welcher von dem der Motorbelastung entsprechenden Signal gesteuert wird, und der sich auf zwei verschiedene Wege entladen kann, wobei der erste Weg über einen Thyristor mit hoher Prüfsperrspannung geht, der bei der der Geschwindigkeit des Fahrzeugs entsprechenden Signalperiode aktiviert wird, und der zweite Weg über einen programmierbaren Schalttransistor mit schwachem Sperrstrom, der jedesmal durchlässig wird, wenn die Ladespannung des Kondensators eine über den Schwellengenerator (43) festgelegte Erregungsspannung erreicht, und wobei jeder der beiden Wege mit einem Steuereingang der bistabilen Kippschaltung (45) verbunden ist.

14. Elektronische Steuervorrichtung gemäss Anspruch 13, gekennzeichnet dadurch, dass der Schwellengenerator (45) einen regelbaren Spannungsteiler enthält, der mit dem Tor des vorstehend genannten Transistors verbunden ist.

15. Elektronische Steuervorrichtung gemäss einem der Ansprüche 10 bis 14, gekennzeichnet dadurch, dass sie ausserdem eine Hysterese-Steuervorrichtung (44) aufweist, die eine Diode enthält, welche den Komplementärausgang (94) der bistabilen Kippschaltung (45) mit dem Schwellengenerator (43) verbindet, so dass der Wert der Erregungsspannung des genannten Transistors erhöht wird, und so den Übergang der Gangwechselschwelle von dem dem Höherschalten der Gänge entsprechenden Wert auf den Wert, der dem Herunterschalten der Gänge entspricht, zu ermöglichen.

16. Elektronische Steuervorrichtung gemäss einem der Ansprüche 10 bis 15, gekennzeichnet dadurch, dass die Kippschaltungen der beiden vorstehend genannten Periodenmeter miteinander verbunden sind, so dass die Steuerimpulse der Kippschaltung des zweiten Periodenmeters (11) für den Gangwechsel vom zweiten in den dritten Gang und umgekehrt auch das erste Periodenmeter (7) steuern können, falls die Steuerimpulse des letzteren eine zu geringe Amplitude haben.

17. Elektronische Steuervorrichtung gemäss einem der vorstehenden Ansprüche, gekennzeichnet dadurch, dass die sequentielle Schaltvorrichtung (G₂) einen ersten Verarbeitungsblock, versehen mit einem Rampengenerator aufweist (200), der die von der elektronischen Steuervorrichtung (G₁) gesendeten Signale empfängt, und der mit einem Spannungsvergleicher mit Festwertschwelle (202) verbunden ist, der das erste Steuersignal (E) für das erste Elektroventil (EL₁) mit konstanter Verzögerung (Δt₁) definiert.

18. Elektronische Steuervorrichtung gemäss einem der vorstehenden Ansprüche, gekennzeichnet dadurch, dass die sequentielle Schaltvorrichtung (G₂) einen zweiten Verarbeitungsblock, versehen mit einem Linearrampengenerator (199) aufweist, der das Umkehrsignal (B) des zweiten von der elektronischen Steuervorrichtung (G₂) gesendeten Schwellensignal empfängt und ein Signal, das von einem Spannungsvergleicher mit Festwertschwelle (198) gesendet wird, der vom Signal (C) in Abhängigkeit der Stellung des Gaspedals gespeist wird, so dass die Neigung der erzeugten Rampe definiert werden kann.

19. Elektronische Steuervorrichtung gemäss Anspruch 18, gekennzeichnet dadurch, dass der zweite Verarbeitungsblock weiterhin einen Spannungsvergleicher mit variablem Schwellenwert enthält, der eine Spannungswiedergabe der Frequenz des Signals (D) in Abhängigkeit der Fahrzeuggeschwindigkeit empfängt, wobei das Ausgangssignal des genannten Linearrampengenerators (199) und beide Schwellensignale von der elektronischen Steuervorrichtung (G₁) gesendet werden (A, B).

20. Elektronische Steuervorrichtung gemäss einem der Ansprüche 1 bis 17, gekennzeichnet dadurch, dass die sequentielle Schaltvorrichtung (G₂), einen zweiten Verarbeitungsblock, versehen mit einem Rampengenerator (207), aufweist, wobei der Rampengenerator die beiden Gangwechselschwellensignale (A, B) ausgegeben von der elektronischen Steuervorrichtung (G₁), empfängt.

21. Elektronische Steuervorrichtung gemäss Anspruch 20, gekennzeichnet dadurch, dass die sequentielle Schaltvorrichtung (G₂) ausserdem aus einem Frequenzvergleicher mit Festwertschwellen (205) besteht, der das Frequenzsignal (D) Fahrzeuggeschwindigkeit empfängt, einem Spannungsvergleicher mit regelbaren Schwellen (209), der das Ausgangssignal des vorstehenden Rampengenerators empfängt, sowie die Ausgangssignale eines Spannungsvergleichers mit Festwertschwellen (206), der das Signal (C) Stellung des Gaspedals und das Ausgangssignal des Frequenzvergleichers mit Festwertschwelle (203) verarbeitet, wobei der letztere das Frequenzsignal (D) Fahrzeuggeschwindigkeit verarbeitet.

22. Elektronische Steuervorrichtung gemäss einem der vorstehenden Ansprüche, gekennzeichnet dadurch, dass sie aus zwei Leistungsstufen besteht, die jeweils die von der sequentiellen Schaltvorrichtung ausgegebenen Signale (E) und (F) empfängt, wobei jede der genannten Leistungsstufen einen Leistungstransistor (217) enthält, dessen Ladung zwischen dem Sender und der Stromquelle geschaltet ist und aus der Spule (216) des jeweiligen Elektroventils besteht, wobei der Kollektor mit der Erde und die Basis mit dem Verstärkerausgang verbunden sind, wobei ein parallel geschalteter Widerstand (214) dazwischengeschaltet und mit der Stromquelle verbunden ist.

FIG.1

E1 E2 F1 F2

L

VM

H

1 2 A N R P

EL1 EL2

G

A

G2

G1

C1 C2 C3 C4

# FIG.2

| LEVIER SELECTION | P | R | N | A | | | 2 | | 1 | A ou A ⟷ 2 | |
|---|---|---|---|---|---|---|---|---|---|---|---|
| | | | | | | | | | | ETATS PERMANENTS → | ETATS TRANSITOIRES |
| RAPPORT ENGAGE | O | AR | O | 1 | 2 | 3 | 1 | 2 | 1 | 2↗3 | 3↘2 |
| $EL_1$ | O | O | O | O | L | O | O | L | O | L | L |
| $EL_2$ | L | L | L | L | L | O | L | L | L | O | O |
| $E_1$ | O | O | O | L | L | L | L | L | L | L | L |
| $E_2$ | O | L | O | O | O | L | O | O | O | O | O |
| $F_1$ | O | L | O | O | O | O | O | O | L | O | O |
| $F_2$ | O | O | O | O | L | O | O | L | O | L | O→L |

FIG.3

FIG.4

FIG.5

## FIG.6

## FIG.7

0 022 944

# FIG.8

# FIG.9

FIG.10

FIG.11

0 022 944

35

FIG.12

FIG.13

FIG.14

FIG.15

FIG.16

FREQUENCE DE D

# FIG.17

## FIG.18

$\Delta t_2$

$T_3$ — $C < U_3$

$T_4$ — $C > U_3$

$T_5$ — $C < U_3$

$0$

$F_3$  $F_4$    FREQUENCE  DE  D

## FIG 19

211

214

212

213  215

216

$EL_1 , EL_2$

217

$U_a$